(19) Europäisches Patentamt
European Patent Office
Office européen des brevets

(11) **EP 2 600 606 A2**

(12) **EUROPEAN PATENT APPLICATION**

(43) Date of publication:
**05.06.2013 Bulletin 2013/23**

(51) Int Cl.:
***H04N 1/62*** *(2006.01)*

(21) Application number: **12194460.7**

(22) Date of filing: **27.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.11.2011 JP 2011262972**
**14.08.2012 JP 2012179805**

(71) Applicant: **Ricoh Company, Ltd.**
**Tokyo 143-8555 (JP)**

(72) Inventor: **Kakinuma, Akihiro**
**Ohta-ku, Tokyo 143-8555 (JP)**

(74) Representative: **Maury, Richard Philip**
**Marks & Clerk LLP**
**90 Long Acre**
**London**
**WC2E 9RA (GB)**

(54) **Image processing device, image processing system, image processing method, and recording system**

(57)     An image processing device (100) includes a display unit which displays images, an area designation unit (110) which receives a target image area and an input image area both designated from the images, a tone function computing unit (112) which computes a one-dimensional tone function of the target image area and a one-dimensional tone function of the input image area, a conversion information generating unit (113) which generates conversion information to convert the one-dimensional tone function of the input image area into the one-dimensional tone function of the target image area, an image conversion processing unit (115) which converts image data of the input image area based on the conversion information, and a display control unit (116) which displays the image containing the converted image data of the input image area on the display unit.

FIG.2

EP 2 600 606 A2

**Description**

BACKGROUND OF THE INVENTION

1. Field of the Invention

The present disclosure relates to an image processing device, an image processing system, an image processing method, and a recording medium, which are adapted for performing image processing of image data.

2. Description of the Related Art

Image data (digital image data) are obtained by image capturing by a digital camera or by reading of a photographic film or paper by a scanner, and the image data may be output to a printer via a data recording medium or a data transfer cable, so that the image data are printed on a printing sheet. Image data may be transmitted to a display monitor via the Internet, so that the image is displayed on the display monitor. Image data are used in various manners.

When image data are output to a printing sheet or a display monitor in a visible form and the output image is used on a commercial level, it is required that the output image data have a high level of image quality. Usually, the output image data having a high level of image quality means that the image has vivid colors with fine black and the graininess and the sharpness are good.

In particular, when the output image data are used on a commercial level, it is necessary that the image representation intended by an author is faithfully reproduced on a printing sheet or displayed on a display monitor, the output image attracts viewers, and a high level of image quality that appeals to sensitivity is pursued.

However, there are various image processing parameters, including grayscale, contrast, hue and color balance, which should be adjusted, and it is difficult to specify appropriate quantities of the parameters for an image processing method for obtaining a high level of image quality. For this reason, the image quality of the image output to the printing sheet or displayed on the display monitor relies on the intuition and experience of the author or the user who performs the image processing.

An image processing method for obtaining a high level of image quality is varied depending on the kind of the input image, and, in many cases, use of a general-purpose image processing method is not appropriate. Hence, in order to obtain the intended color reproduction characteristics, it is necessary that the user has the advanced knowledge and the technology of image processing, and except for a well-versed engineer in the image processing field, obtaining the intended color reproduction characteristics is a very difficult task.

Furthermore, when image processing is performed while paying attention to image data of a predetermined input image area, the image processing may affect image data of other image areas different from the input image area for which the image processing is performed. In many cases, the resulting image as a whole does not show the intended color reproduction characteristics.

Specifically, an image processing method that is able to easily provide color reproduction characteristics of a target image, such as skin, the sky, the sea, green leaves, etc., for image data of an input image area designated from an input image is demanded.

For example, Japanese Laid-Open Patent Publication No. 2007-158824 discloses an image processing device in which colors of plural skin color pixels which constitute a skin color image portion are designated by three attributes of lightness, saturation and hue; the image of the skin color portion is corrected by changing partially two-attribute distributions using two of the three attributes; and the skin color adjustment is enabled without needing complicated parameter operations.

However, in the image processing device disclosed in Japanese Laid-Open Patent Publication No. 2007-158824, how to change the two-attribute distributions relies on the predetermined standard color conversion parameters, and it may not be applicable to image processing other than a specific skin color representation.

Moreover, in the image processing device disclosed in Japanese Laid-Open Patent Publication No. 2007-158824, the amounts of adjustment of the parameters are input from the input unit, and the color conversion parameters are corrected based on the amounts of adjustment so that the skin color representation after the adjustment can be variously changed. However, when a user is unfamiliar with image processing, it is difficult for the user to determine the amounts of adjustment for obtaining the intended color reproduction characteristics. Accordingly, the problem of the difficulty in providing the intended color reproduction characteristics for the input image area still remains unresolved.

SUMMARY OF THE INVENTION

In one aspect, the present disclosure provides an image processing device which is capable of easily providing color reproduction characteristics of a target image for an input image area designated from an input image.

In an embodiment, the present disclosure provides an image processing device including: a display unit configured to display images; an area designation unit configured to receive a target image area and an input image area both designated from the images; a tone function computing unit configured to compute a one-dimensional tone function of the target image area and a one-dimensional tone function of the input image area; a conversion information generating unit configured to generate conversion information to convert the one-dimensional tone function of the input image area into the one-dimensional tone function of the target image area; an image conversion processing unit configured to convert image data of the input image area based on the conversion information; and a display control unit configured to display the image containing the image data of the input image area converted by the image conversion processing unit on the display unit.

Other objects, features and advantages of the present disclosure will become more apparent from the following detailed description when read in conjunction with the accompanying drawings.

BRIEF DESCRIPTION OF THE DRAWINGS

FIG. 1 is a block diagram showing the hardware composition of an image processing device of a first embodiment of the present disclosure.

FIG. 2 is a block diagram showing the functional composition of the image processing device of the first embodiment.

FIG. 3A and FIG. 3B are diagrams showing examples of image data of a designated input image area and a designated target image area received by an area designation unit of the image processing device of the first embodiment.

FIG. 4A and FIG. 4B are diagrams showing examples of one-dimensional tone functions which are computed by a tone function computing unit of the image processing device of the first embodiment based on color component plots received by a color component receiving unit.

FIG. 5A, FIG. 5B, and FIG. 5C are diagrams showing examples of translation tables which are generated by a conversion information generating unit of the image processing device of the first embodiment.

FIG. 6 is a diagram for explaining a conversion formula generated by the conversion information generating unit of the image processing device of the first embodiment.

FIG. 7 is a flowchart for explaining an image processing method performed by the image processing device of the first embodiment.

FIG. 8 is a diagram showing an example of images displayed on a display unit by a display control unit of the image processing device of the first embodiment.

FIG. 9 is a diagram showing an example of images displayed on the display unit by the display control unit of the image processing device of the first embodiment.

FIG. 10 is a diagram showing an example of images displayed on the display unit by the display control unit of the image processing device of the first embodiment.

FIG. 11 is a diagram showing an example of images displayed on the display unit by the display control unit of the image processing device of the first embodiment.

FIG. 12 is a diagram showing an example of images displayed on the display unit by the display control unit of the image processing device of the first embodiment.

FIG. 13 is a diagram showing an example of images displayed on the display unit by the display control unit of the image processing device of the first embodiment.

FIG. 14 is a diagram showing an example of images displayed on the display unit by the display control unit of the image processing device of the first embodiment.

FIG. 15 is a flowchart for explaining an image processing method performed by the image processing device of the first embodiment.

FIG. 16 is a block diagram showing the functional composition of an image processing device of a second embodiment of the present disclosure.

FIG. 17A is a diagram showing an example of image data displayed by a target image selection unit of the image processing device of the second embodiment.

FIG. 17B is a diagram showing an example of one-dimensional tone functions stored in the image processing device of the second embodiment.

FIG. 18 is a flowchart for explaining an image processing method performed by the image processing device of the second embodiment.

FIG. 19 is a diagram showing the composition of an image processing system of a third embodiment of the present disclosure.

FIG. 20 is a block diagram showing the hardware composition of an image forming device in the third embodiment.

FIG. 21 is a block diagram showing the hardware composition of an image processing server in the third embodiment.
FIG. 22 is a block diagram showing the functional composition of the image processing system of the third embodiment.

DETAILED DESCRIPTION OF THE PREFERRED EMBODIMENTS

A description will be given of embodiments of the present disclosure with reference to the accompanying drawings.

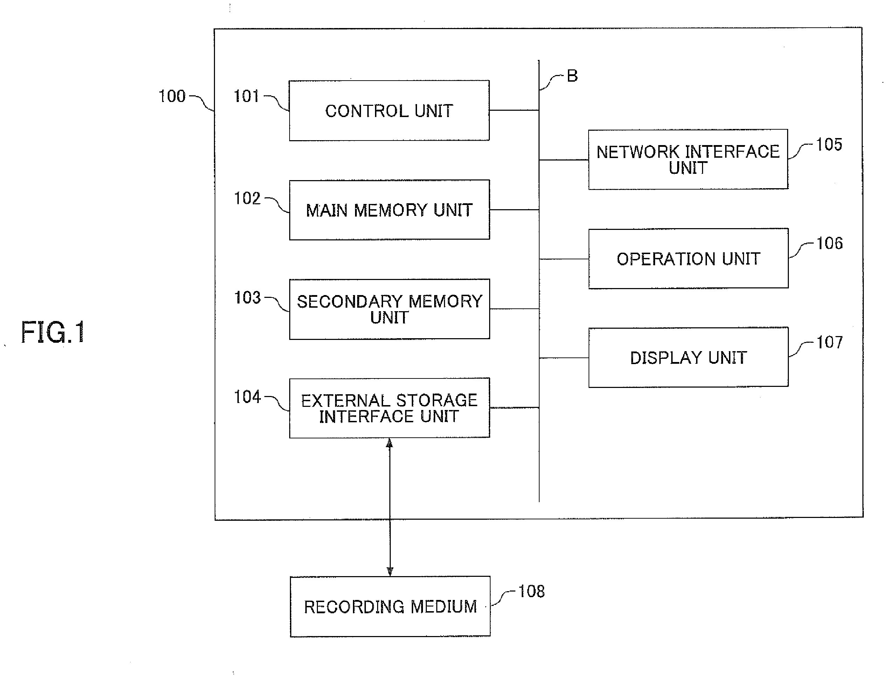

FIG. 1 shows the hardware composition of an image processing device 100 of a first embodiment of the present disclosure. As shown in FIG. 1, the image processing device 100 includes a control unit 101, a main memory unit 102, a secondary memory unit 103, an external storage interface unit 104, a network interface unit 105, an operation unit 106 and a display unit 107, which are interconnected by a bus B.

The control unit 101 may include a CPU (central processing unit) which performs control of the respective units of the image processing device and performs computation and processing of data. The control unit 101 may include a processor unit which executes a program stored in the main memory unit 102, and the processor unit receives data from an input unit or a storage unit, performs computation and processing of the data, and outputs the processed data to an output unit or a storage unit.

The main memory unit 102 may include a ROM (read only memory), a RAM (random access memory), etc. In the main memory unit 102, the OS (operating system) as the basic software executed by the control unit 101, application programs and data are stored or temporarily retained.

The secondary memory unit 103 may include a HDD (hard disk drive) or the like. In the secondary memory unit 103, data relevant to the application programs and others are stored.

The external storage interface unit 104 provides an interface between a recording medium 108, such as a flash memory, and the image processing device 100. For example, by using a data transmission line, such as USB (universal serial bus), the external storage interface unit 104 is connected to the recording medium 108.

A predetermined program is stored in the recording medium 108, and the recording medium 108 is attached to the image processing device 100. The predetermined program stored in the recording medium 108 is installed in the main memory unit 102 of the image processing device 100 through the external storage interface unit 104. After the installation, the predetermined program is read from the main memory unit 102 and executed by the control unit 101 of the image processing device 100.

The network interface unit 105 provides an interface between a not-shown peripheral device and the image processing device 100, the peripheral device having a communication function and being connected to the image processing device 100 via a wired or wireless network, such as LAN (local area network) or WAN (wide area network), which is constructed of data transmission lines.

The operation unit 106 may include key switches composed of hard keys, a mouse, etc.

The display unit 107 is, for example, an LCD (liquid crystal display), an organic EL (electroluminescence) display, etc. Images, operational icons, etc., are displayed on the display unit 107 and the display unit 107 serves as a user interface for a user to perform various setting processes when using functions of the image processing device 100.

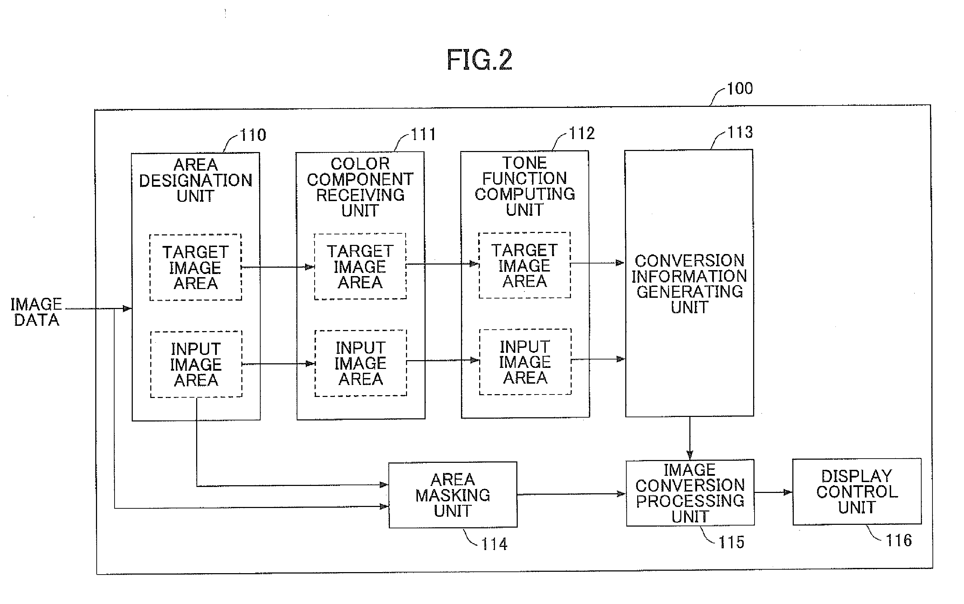

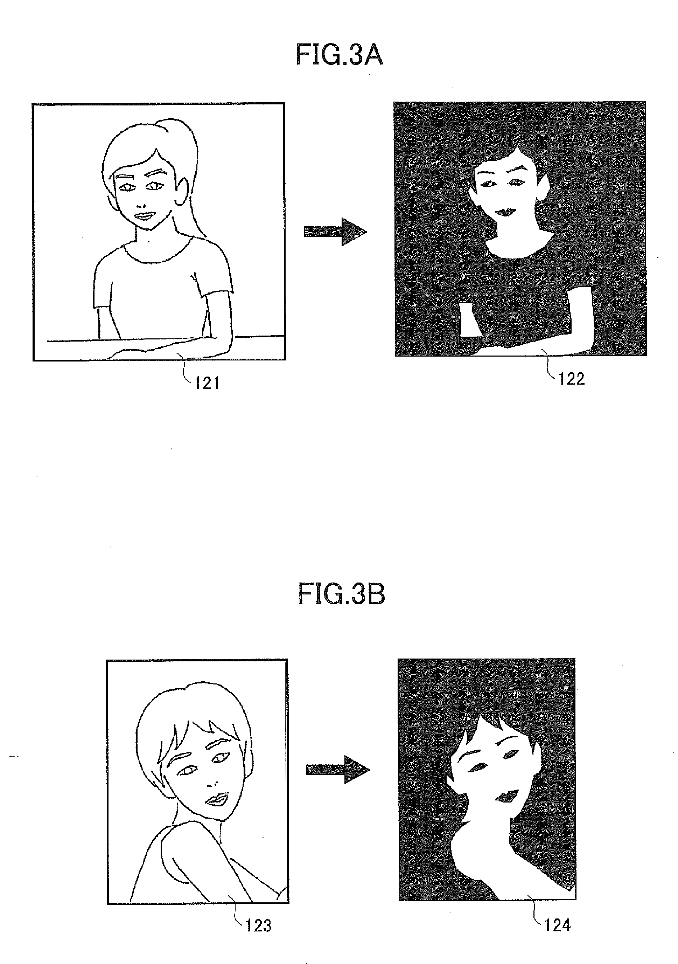

FIG. 2 is a block diagram showing the functional composition of the image processing device 100 of the first embodiment. FIGS. 3A-3B, 4A-4B and 5A-5C show examples of the data used for image processing in the image processing device 100 of the first embodiment. The functional composition of the image processing device 100 will be described with reference to these figures.

As shown in FIG. 2, the image processing device 100 of the first embodiment includes an area designation unit 110, a color component receiving unit 111, a tone function computing unit 112, a conversion information generating unit 113, an area masking unit 114, an image conversion processing unit 115, and a display control unit 116. First, in the image processing device 100, one or more image data groups are input and the input image data include an input image area in which the image processing is to be performed and a target image area which is nearest to user's desired color reproduction characteristic on which the image processing is based.

After the image data are input, the user designates the image areas of the target image and the input image displayed on the display unit 107, and the area designation unit 110 in the image processing device 100 receives the input image area and the target image area both designated in the image data by the user. After the input image area and the target image area are received, the area designation unit 110 extracts partially image data of the pixels corresponding to the input image area and the target image area from all the pixels contained in the input image data.

In the present embodiment, the input image area is an image area where the image processing of the partially extracted image data is to be performed by the user. The target image area is an image area whose image data have color reproduction characteristics nearest to the user's desired color reproduction characteristics.

FIG. 3A and FIG. 3B show examples of image data which are received by the area designation unit 110 as the designated input image area 122 and the designated target image area 124. FIG. 3A shows an example of image data including an input image 121 which is subjected to the image processing, and an input image area 122 (white portion) extracted from the input image 121. Alternatively, two or more input image areas 122 may be designated from one image data group, and one or more input image areas 122 may be designated from plural image data groups.

In the example of FIG. 3A, the area (white portion) which is subjected to the image processing, and the area (black area) which is not subjected to the image processing are separated by clear boundary lines. Alternatively, the boundary areas between the image-processing area and the non-image-processing area may be obscured, and the gray level in such areas may be gradually changed. Alternatively, the boundary areas may be obscured and the gray level in such areas may be changed depending on a boundary position.

FIG. 3B shows an example of image data including a target image 123 and a target image area 124 (white portion) which is extracted from the target image 123 by a user.

In the examples of FIGS. 3A and 3B, the input image area 122 and the target image area 124 are designated from different image data groups, respectively. Alternatively, the input image area 122 and the target image area 124 may be designated from different portions of one image data group.

The area designation unit 110 is arranged to receive the input image area 122 and the target image area 124 which are designated from the input image data by the user. Various methods of the area designation for designating a desired image area may be considered.

For example, the input image 121 is displayed on a computer monitor as an example of the display unit 107 of the image processing device 100, and one or more points within the input image 121 are designated by a user using the pointer of the computer mouse as an example of the operation unit 106. The area designation unit 110 may receive the input image area 122 by automatically detecting the hue area approximated to the pixels designated by the user.

Moreover, for example, when the input image 121 is displayed on the computer monitor, the outer circumference of the input image area 122 is selected at predetermined intervals by a user using the pointer of the mouse, and the area which ties the coordinates of the selected points together may be extracted as the input image area 122. Further, instead of using the pointer of the mouse, the user may input the coordinate values indicating the points to be selected in the input image area 122, and the input image area 122 may be extracted.

As described above, after the input image area 122 and the target image area 124 designated from the input image data are received by the area designation unit 110, the color component receiving unit 111 receives the color components of the pixels which constitute the input image area 122 and the color components of the pixels which constitute the target image area 124, respectively.

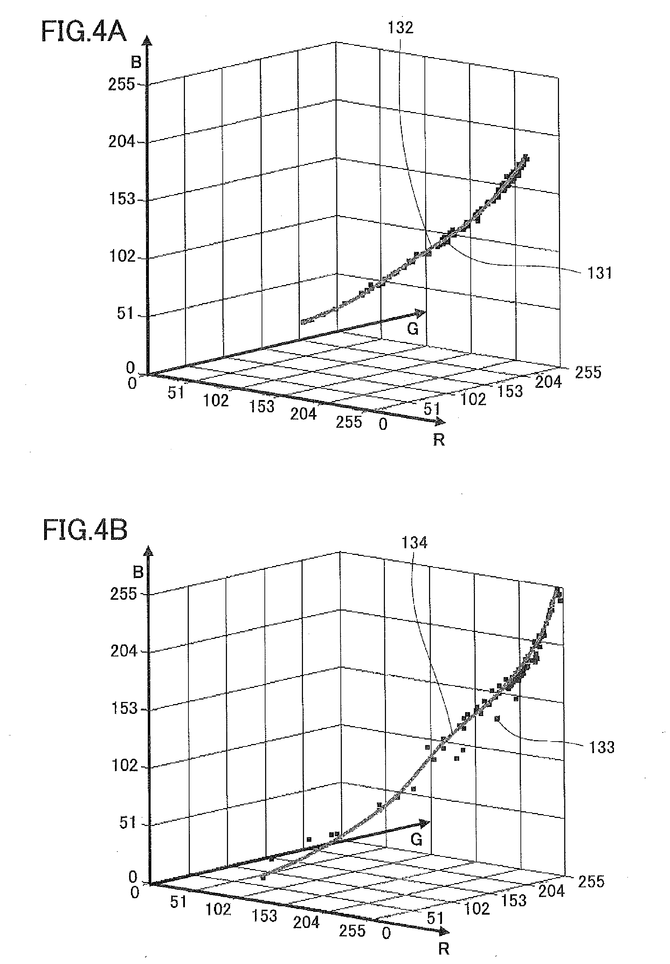

FIG. 4A and FIG. 4B show examples of the color components received by the color component receiving unit 111 and the one-dimensional tone functions computed from the color components by the tone function computing unit 112.

In the example of FIG. 4A, the color components 131 of the pixels which constitute the input image area 122 shown in FIG. 3A are received as 8-bit grayscale values (0-255) of RGB and they are plotted in the three-dimensional color space. In the example of FIG. 4B, the color components 133 of the pixels which constitute the target image area 124 shown in FIG. 3B are received as the 8-bit grayscale values (0-255) of RGB and they are plotted in the three-dimensional color space.

In the image processing device 100 of the first embodiment, the 8-bit grayscale values of RGB are used as the color components 131 and 133 which are the basis for computing the one-dimensional tone function. However, the present disclosure is not limited to this embodiment. Alternatively, various color coordinate systems may be used as the color components in accordance with the purpose of use of image data after the image processing is performed or the environment where the image processing is performed.

For example, if the image data contain four color components of CMYK which are used in the offset printing process or the like, the halftone percentages of CMYK (%) may be used as the color components. However, when treating the four color components as in the CMYK, the three-dimensional plotting as shown in FIG. 4A and FIG. 4B cannot be used. In this case, two or more one-dimensional tone functions are needed and such one-dimensional tone functions include, for example, a one-dimensional tone function derived from the three-dimensional plots of the three attributes of C, M and Y and a one-dimensional tone function derived from the K-containing two-dimensional plots of M and K.

Moreover, the L*a*b* color coordinate system may be used as the color components. In this case, as the color components to be used include the three attributes of L* (lightness), a* (the degree of red - green) and b* (the degree of yellow - blue), or the three attributes of L* (lightness), C* (saturation) and H (hue angle). Further, not only the above-described examples but also various color spaces, such as HSV color space and YCbCr color space, may be used.

It is preferred for the color component receiving unit 111 to receive the color components of all the pixels that constitute the input image area 122 and the color components of all the pixels that constitute the target image area 124. However, some pixels may be thinned out from the pixels which constitute the image data, and may receive the color components from the remaining pixels. In a case in which the data size is large, by thinning out some pixels from all the pixels, it is possible to avoid reduction of the image processing speed due to a large amount of the received image data.

However, in this case, it is desirable to select the pixels from which the color components are received appropriately, so that a maximum lightness point (or a minimum G grayscale point) and a minimum lightness point (or a maximum G grayscale point) in the input image area 122 and the target image area 124 are included and the received color components can express smoothly the grayscale between the maximum lightness point and the minimum lightness point.

After the color component receiving unit 111 receives the color components of the pixels which constitute the input image area 122 and the color components of the pixels which constitute the target image area 124, the tone function computing unit 112 computes a one-dimensional tone function which expresses the color tone in a quantitative manner, from the received color components of each image area.

In FIG. 4A and FIG. 4B, the solid lines 132 and 134 extending along the plots of the color components 131 and 133 respectively indicate the one-dimensional tone functions computed from the respective color components 131 and 133 of the input image area 122 and the target image area 124 by the tone function computing unit 112.

The one-dimensional tone function computed by the tone function computing unit 112 is, for example, an approximation function which is determined by regression analysis to minimize a distance from the plots of the received color components of the pixels. An effective range of the one-dimensional tone function computed is limited to a lightness (or G grayscale) range between a maximum lightness point (or a minimum G grayscale point) and a minimum lightness point (or a maximum G grayscale point) among each of the color components 131 and 133 respectively received from the input image area 122 and the target image area 124.

After the tone function computing unit 112 computes a corresponding one-dimensional tone function for each of the input image area 122 and the target image area 124, the conversion information generating unit 113 generates conversion information which converts the color components of the pixels in the input image area 122 into the components of the pixels in the target image area 124.

Two examples of the method of generating conversion information by the conversion information generating unit 113 will be described in the following.

A first example of the method of generating conversion information which uses a translation table as conversion information in order to convert the color components of the pixels in the input image area 122 will be described.

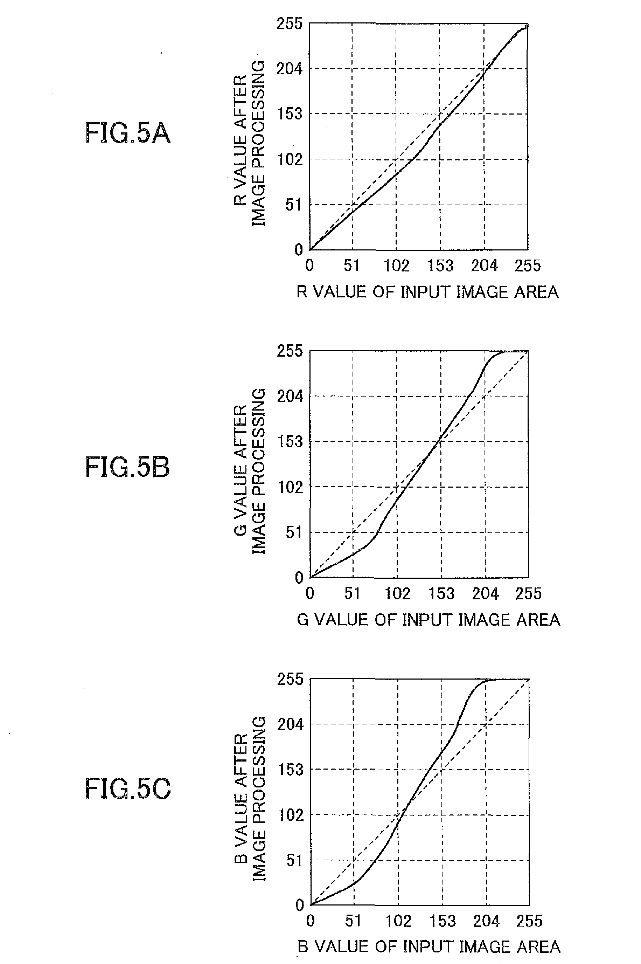

FIGS. 5A to 5C show examples of translation tables which are determined from the one-dimensional tone functions of the input image area 122 and the target image area 124 shown in FIGS. 4A and 4B. Specifically, FIG. 5A, FIG. 5B, and FIG. 5C show grayscale translation tables of R grayscale value, G grayscale value, and B grayscale value, respectively. In FIGS. 5A to 5C, the horizontal axis indicates the grayscale values of the pixels in the input image area 122, and the vertical axis indicates the grayscale values of the pixels after the image processing (grayscale conversion) of the pixels.

The conversion information generating unit 113 performs linear transformation of the one-dimensional tone function of the input image area 122 into the one-dimensional tone function of the target image area 124 and generates a translation table as a result of the linear transformation. Specifically, the color component values between the maximum lightness point and the minimum lightness point of the one-dimensional tone function of the input image area 122 are respectively converted into the color component values between the maximum lightness point and the minimum lightness point of the one-dimensional tone function of the target image area 124, and a translation table is generated in which the color component values of the two one-dimensional tone functions represent a one-to-one relationship.

Next, a second example of the method of generating conversion information which uses a conversion formula as conversion information in order to convert the color components of the pixels in the input image area 122 will be described.

If the RGB conversion from the one-dimensional tone function of the input image area 122 to the one-dimensional tone function of the target image area 124 can be represented by a unique conversion formula, performing the grayscale conversion using the conversion formula is possible.

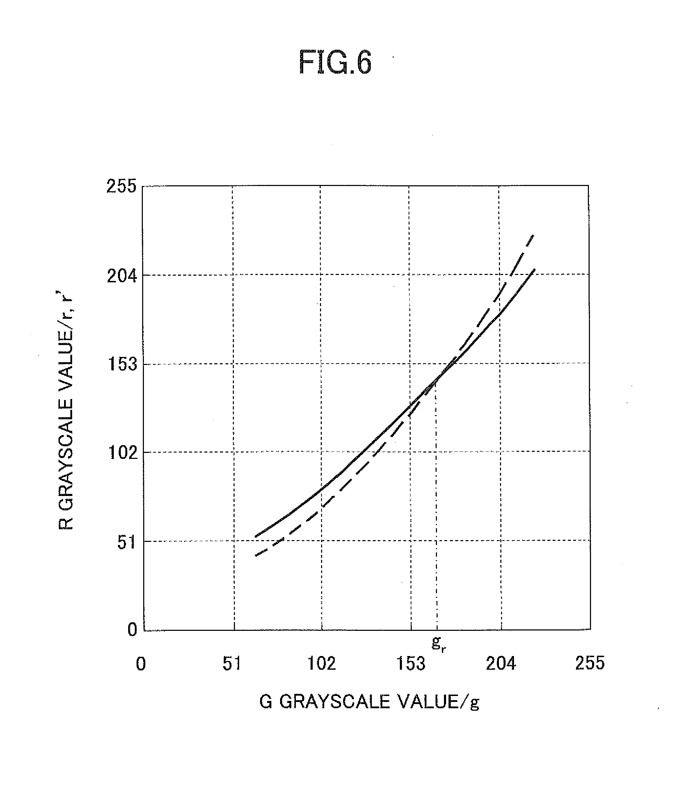

An example of a one-dimensional tone function used as the basis of the conversion of R grayscale value is shown in FIG. 6. In FIG. 6, the horizontal axis indicates the G grayscale value, the vertical axis indicates the R grayscale value, the solid line indicates the one-dimensional tone function of the input image area 122, and the dashed line indicates the one-dimensional tone function of the target image area 124. If it is assumed that R grayscale values of the one-dimensional tone functions of the input image area 122 and the target image area 124 for a G grayscale value (g) are denoted by r and r', respectively, the relationship between r and r' can be represented by the following formula (1):

$$r' = r + kr \cdot r(g - gr)/255 \qquad \dots (1)$$

where kr denotes a coefficient of r conversion formula and gr denotes a G grayscale value when r=r'. If the relationship which is similar to that of the above formula (1) is expressed also with respect to G grayscale values and B grayscale values, the respective conversion formulas of RGB can be generated.

Regarding the above conversion formula, it is not necessary to use a single conversion formula from the maximum lightness point to the minimum lightness point of the one-dimensional tone function of the input image area 122. Alternatively, by dividing the lightness (or grayscale) range into two or more small ranges, two or more different conversion formulas may be used for the respective small ranges.

After the conversion information (the translation table or the conversion formula) is generated by the conversion information generating unit 113, the image conversion processing unit 115 performs RGB grayscale conversion of the pixels in the input image area 122 based on the generated conversion information.

Specifically, first, the area masking unit 114 performs masking processing of the image data including the input image area 122, so that image conversion processing may be performed on the input image area 122 contained in the image data. The area masking unit 114 performs masking processing to separate the input image area 122 from other areas of the input image different from the input image area 122, so that the image conversion processing may not be performed for the other areas (the black areas as shown in FIG. 3A) in the image data after the area designation.

Second, based on the conversion information, the image conversion processing unit 115 performs the RGB grayscale conversion for all the pixels in the input image area 122 of the image data after the masking processing is performed by the area masking unit 114.

After the conversion processing is performed by the image conversion processing unit 115 based on the conversion information, the input image area 122 is approximated to the color reproduction characteristics of the target image area 124, and the desired image expression requested by the user can be easily reproduced.

The input image area 122 for which the conversion processing is performed by the image conversion processing unit 115 based on the conversion information is displayed on the display unit 107 by the display control unit 115. Hence, the user can check an image processing result by the image displayed on the display unit 107.

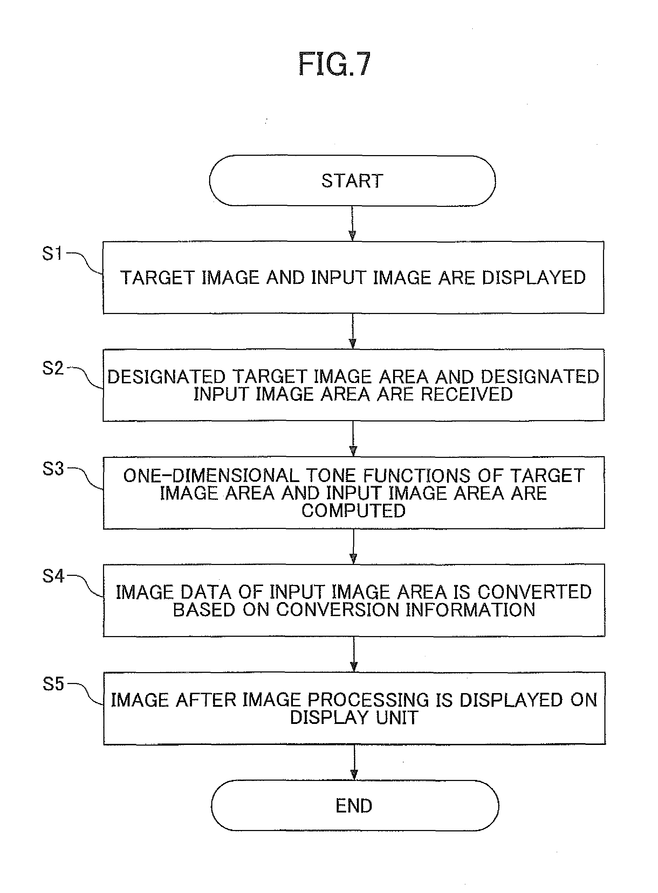

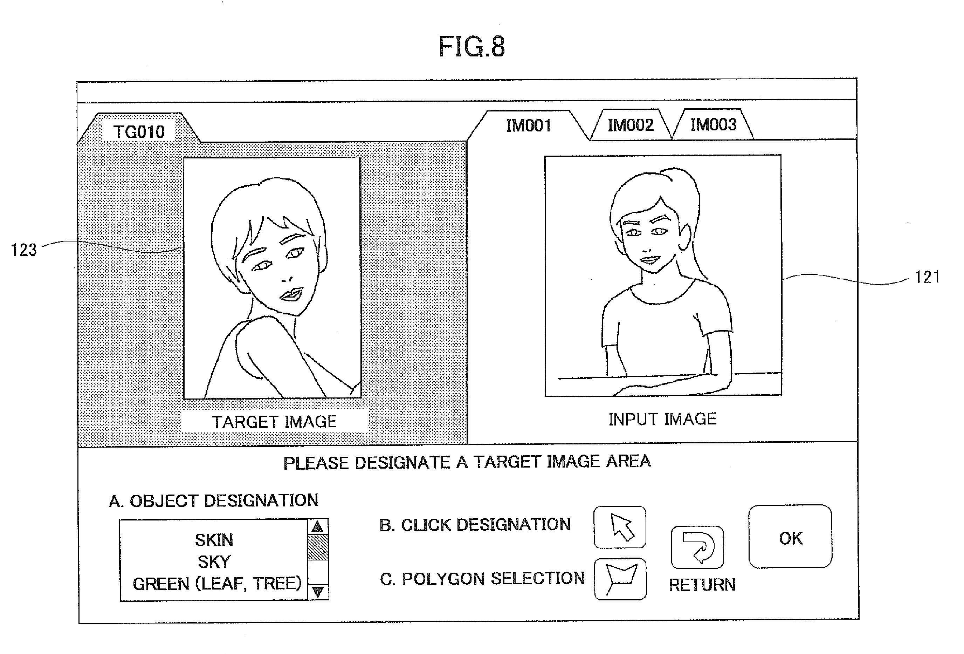

FIG. 7 is a flowchart for explaining an image processing method performed by the image processing device 100 of the first embodiment. FIGS. 8 to 15 are diagrams showing examples of the screen displayed on the display unit 107 by the display control unit 116 in accordance with the processing of the image processing method of FIG. 7.

As shown in FIG. 7, at step S1, the display control unit 116 displays, on the screen of the display unit 107, a target image 123 and an input image 121 which have been input to the image processing device 100.

As shown in FIG. 8, the target image 123 is displayed on the upper left portion of the screen of the display unit 107 and the input image 121 is displayed on the upper right portion of the screen of the display unit 107 by the display control unit 116. When plural input images 121 are present, changing the displayed input image from one to another is possible by selecting one of plural tabs "IM001" to "IM003" as shown in FIG. 8. On the lower portion of the screen, selection buttons to select area designation methods of the input image 121 and the target image 123, a "return" button, an "OK" button, etc., are displayed.

Alternatively, the displayed positions of the target image 123 and the input image 121 of the screen as shown in FIG. 8 may be reversed. The image data may be displayed on the lower portion of the screen and the selection button to select the area designation method of the target image area 124 may be displayed on the upper portion of the screen. Further, the plural input images 121 may be displayed in a single display screen in which the input images reduced in size are listed in order.

Referring back to FIG. 7, at step S2, a designated target image area 124 and a designated input image area 122 are received.

As illustrated on the lower portion of the screen of FIG. 8, the area designation methods of the target image area 124 and the input image area 122 include three options: "A. object designation"; "B. click designation"; and "C. polygon selection". One of these designation methods is selectable by the user. In the following, respective examples in which the target image area 124 is designated from the target image 123 by each of the three designation methods will be described.

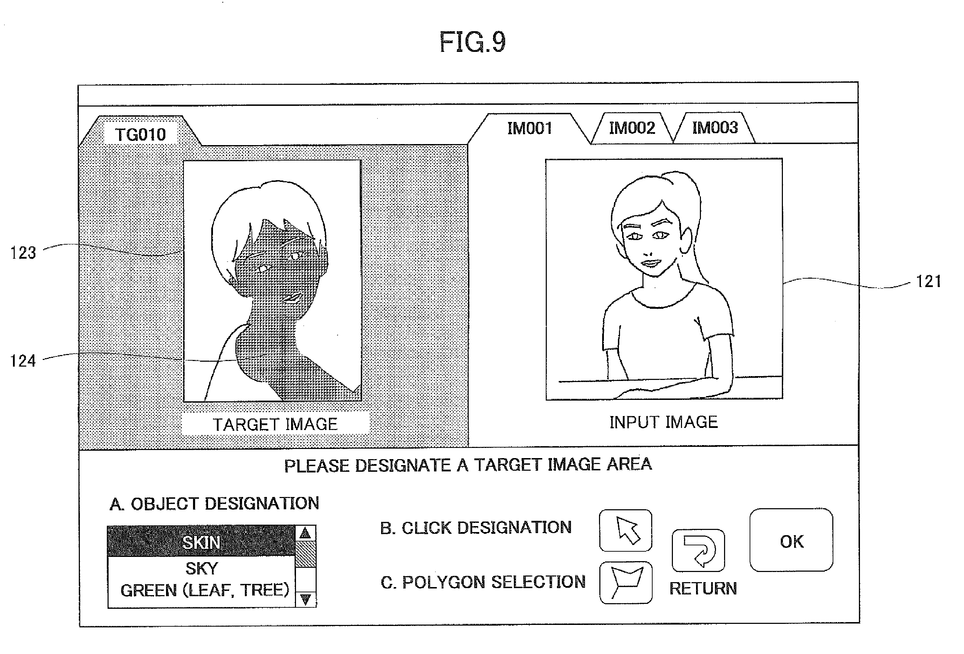

In a case of the option "A. object designation", if one of the terms identifying objects, such as "skin", "sky" and "green (leaves, trees)", is selected by the user, a corresponding area of the selected object is automatically designated from the target image 123. FIG. 9 shows the case in which the object "skin" is selected by the option "A. object designation", and a display form of the corresponding area 124 of the selected object in the target image 123 is changed or inverted. If the object "skin" is selected for a target image 123 containing two or more persons, after the skin is selected for all the persons, a necessary or unnecessary area may be selected or canceled by using the option "B. click designation".

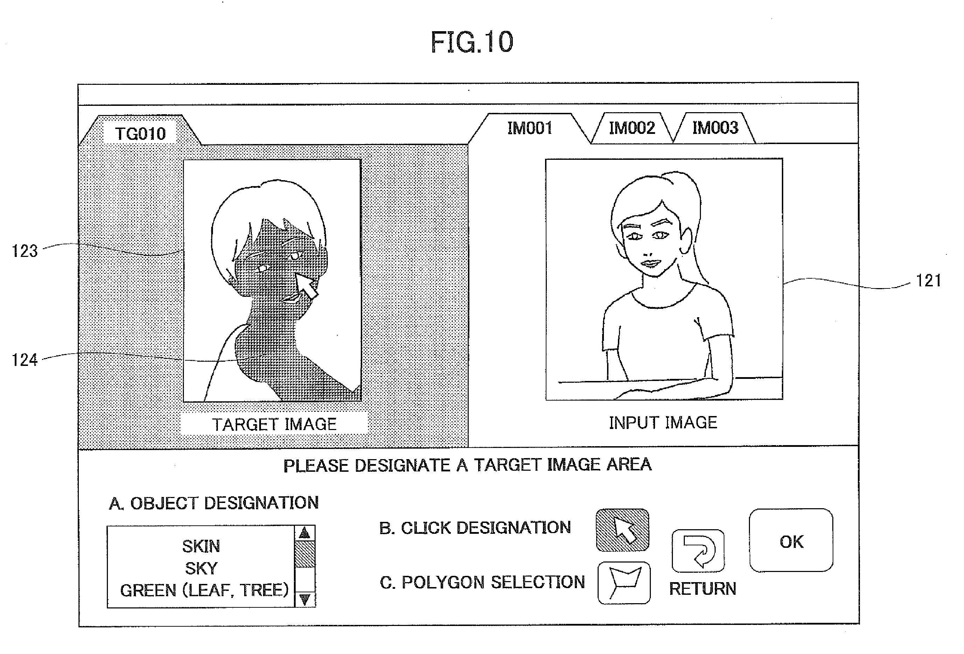

In a case of the option "B. click designation", if one point within the target image 123 is clicked as shown in FIG. 10, a similar color area 124 of the clicked point is automatically designated from the target image 123. If the designated area 124 within the target image 123 is clicked again, the designation of that area is canceled.

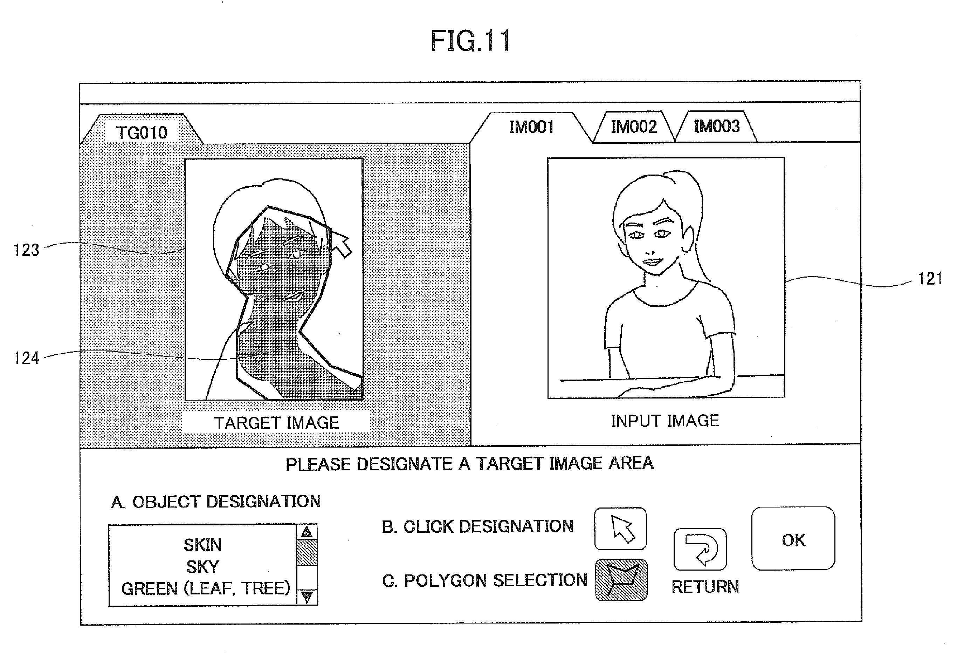

In a case of the option "C. polygon selection", if the area selected by the mouse or touch operation is surrounded by a polygon as shown in FIG. 11, a similar color area 124 inside the surrounded area is automatically designated from the target image 123. If the designated area 124 within the target image 123 is clicked again, the area designation is canceled. By the input operation of the user, a user's desired target image area 124 can be designated from the target image 123 with good accuracy.

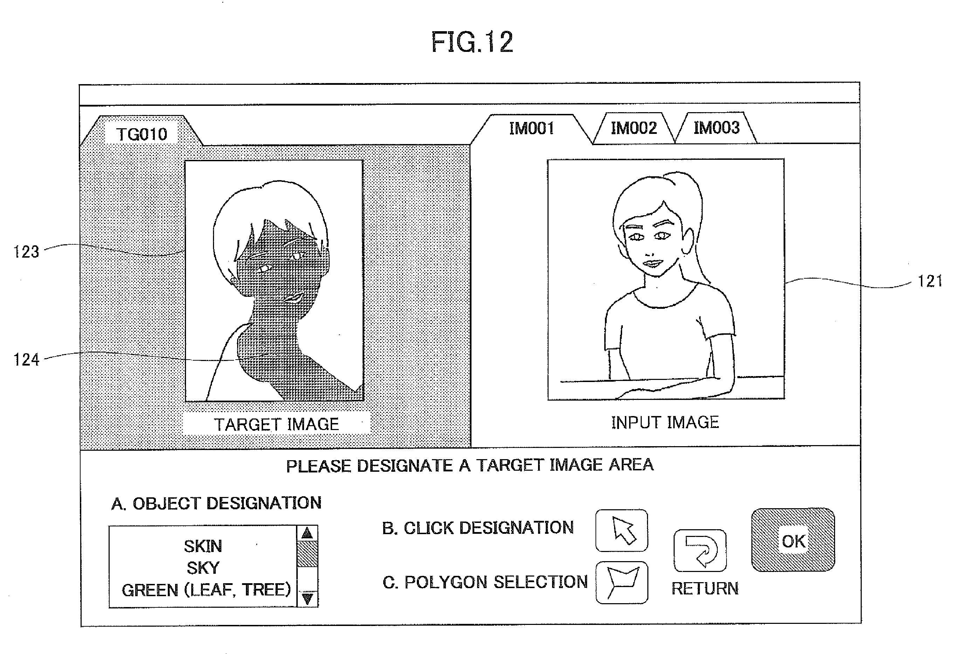

After the designation of the target image area 124 is performed by using the selected one of the three options of "A. object designation", "B. click designation" and "G. polygon selection", the "OK" button is finally pressed as shown in FIG. 12 and the designation of the target image area 124 is fixed. On the other hand, if the user wishes to repeat the designation of the target image area 124, the area designation of the target image area 124 may be performed again by pressing the "return" button.

When the input image area 122 is designated from the input image 121, the similar designation processing is performed by using a selected one of the three options of "A. object designation", "B. click designation" and "C. polygon selection". If two or more input images 121 are present, the input image area 122 may be designated for all the input images 121 in a similar manner.

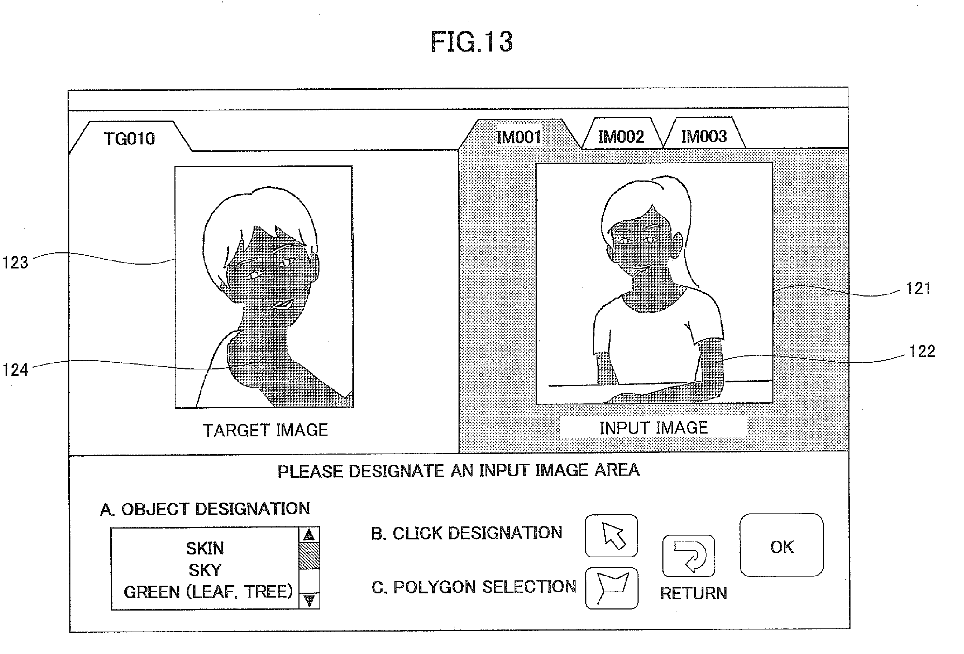

As an example, as shown in FIG. 13, a display form of the background of the input image 121 of the selected tab may be changed or inverted if the input image 121 is clicked by the mouse or touched by touch operation. The user can easily recognize the input image for which the area designation is currently performed. Moreover, as shown in FIGS. 8 to 12, when the area designation of the target image 123 is performed, a display form of the background of the target image 123 is changed or inverted.

Referring back to FIG. 7, after the designated target image area 124 and the designated input image area 122 are received at step S2, at step S3, the tone function computing unit 112 computes the one-dimensional tone functions of the designated target image area 124 and the designated input image area 122, respectively.

Subsequently, at step S4, the conversion information generating unit 113 generates conversion information, and the image conversion processing unit 115 converts the image data of the input image area 122 designated from the input image 121 based on the conversion information.

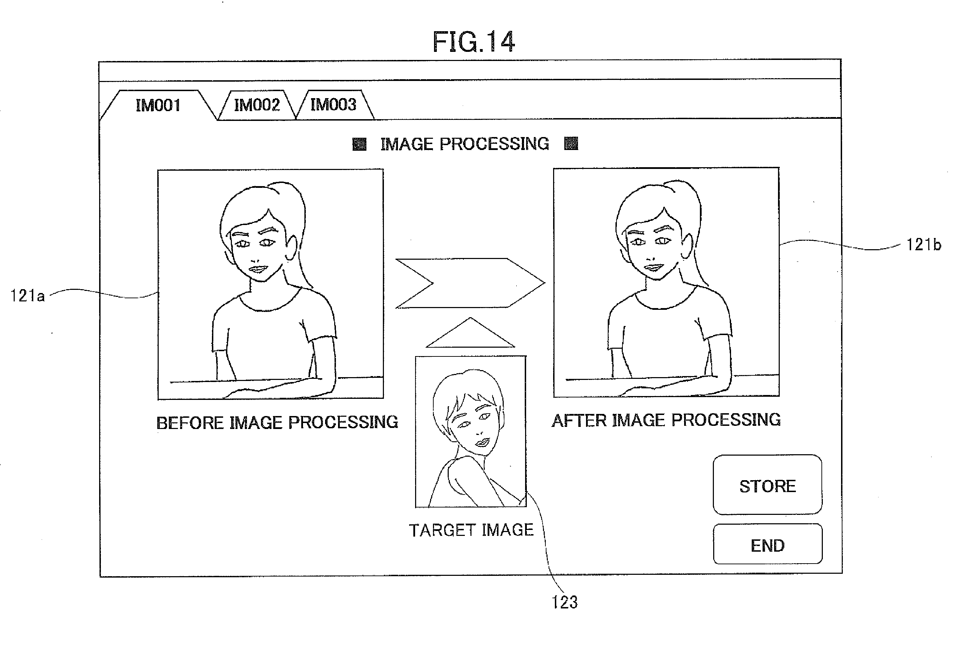

Finally, at step S5, the display control unit 116 displays the image after the image processing on the display unit 107. Then, the processing of the flowchart of FIG. 7 is terminated. FIG. 14 shows an example of the screen displayed on the display unit 107 by the display control unit 116 after the image processing, and the displayed screen includes the input image 121a before the image processing, the input image 121b after the image processing, and the target image 123. If plural input images 121 are present, changing the displayed input image after the image processing is possible by selecting one of the tabs.

As described above, if the user designates the input image area 122 and the target image area 124 from the one or more input image data groups, the image processing device 100 of the first embodiment converts the image data of the input image area 122 and can obtain the image data in conformity with the color reproduction characteristics of the target image. Moreover, it is possible to perform the image processing to convert the image data of each of the two or more input image areas 122 designated by the user, so as to be in conformity with the color reproduction characteristics of the designated target image area 124.

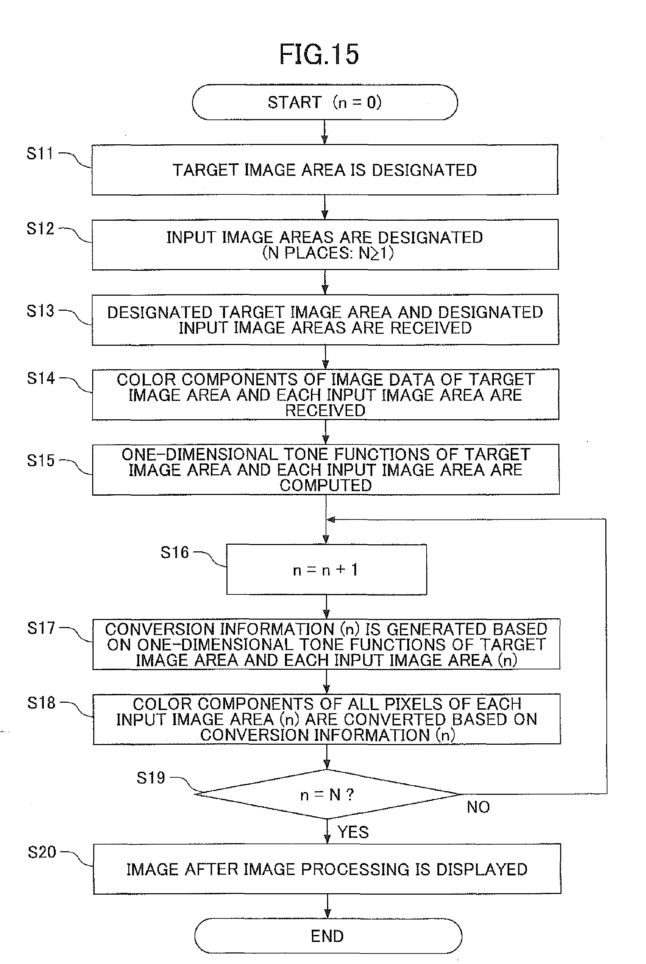

Next, another image processing method performed by the image processing device 100 of the first embodiment will be described with reference to FIG. 15. FIG. 15 shows an example of the image processing method in a case in which plural input image areas 122 at N places (N $\geq$ 1) are designated.

As shown in FIG. 15, the value of a counter "n" is initially zero (n = 0) upon start of the image processing method. At step S11, a user designates a target image area 124 from the input image data, At step S12, the user designates input image areas 122 at N places (N $\geq$ 1) continuously. The image areas designated by the user may include one or more input image areas 122 at the N places of the input image.

Alternatively, the input image areas 122 may be designated first and the target image area 124 may be designated later.

Subsequently, at step S13, the area designation unit 110 receives the designated target image area 124 and the designated input image area 122. At step S14, the color component receiving unit 111 receives the color components of the image data of each of the target image area 124 and the input image area 122, respectively.

After the color components are received by the color component receiving unit 111, at step S15, the tone function computing unit 112 computes a one-dimensional tone function of the target image area 124 and a one-dimensional tone function of the input image area 122. At step S16, the value of the counter "n" is incremented (n = n + 1).

Subsequently, at step S17, the conversion information generating unit 113 generates conversion information for the input image area 122 of the n-th place. At step S18, the image conversion processing unit 115 performs grayscale conversion of the pixels in the input image area 122 of the n-th place based on the conversion information.

The image processing can be performed so that the image data of the two or more input image areas 122 may be converted to be in conformity with the color reproduction characteristics of the target image area 124 because the execution of steps S17 and S18 is repeated for the number of the input image areas 122 designated by the user. Namely, at step S19, it is determined whether the value of the counter "n" is equal to the number "N". If the result of the determination at step S19 is negative, the control is returned to the step S16 and the execution of the steps S17 and S18 is repeated. If the result of the determination at step S19 is affirmative, the control is transferred to step S20.

At step S20, the display control unit 116 displays an image containing the image data of the input image areas 122 converted by the image conversion processing unit 115, on the screen of the display unit 107.

In the foregoing embodiment, the control unit 101 of the image processing device 100 may execute the program which is read from the ROM and loaded into the RAM and perform each of the functions of the image processing method described above. The program executed by the control unit 101 of the image processing device 100 is configured to have modules each including a program for performing a corresponding one of the functions of the respective units (the area designation unit 110, the color component receiving unit 111, the tone function computing unit 112, the conversion information generating unit 113, the area masking unit 114, the image conversion processing unit 115, and the display control unit 116). When the control unit 101 including the CPU executes the program read from the ROM of the main memory unit 102 and loaded into the RAM, the program which causes the CPU to perform the respective functions of the above functional units 110-116.

The program executed by the image processing device 100 of the above-described first embodiment may be stored in an executable form in a computer-readable recording medium, such as CD-ROM, FD, CD-R, DVD, etc., and the computer-readable recording medium storing the program may be offered.

The program executed by the image processing device 100 of the above-described first embodiment may be stored on a computer connected to the network, such as the Internet, and the stored program may be downloaded to another computer via the network. Moreover, the program executed by the image processing device 100 of the first embodiment may also be offered or distributed via the network, such as the Internet.

As described above, according to image processing device 100 of the first embodiment, the input image area 122 and the target image area 124 can be designated from the input image data by a user, and the color reproduction characteristics of the input image area 122 can be converted to be in conformity with the color reproduction characteristics of the target image area 124 by performing the image conversion processing to convert the image data of the target image area 124 into the image data of the input image area 122. Therefore, even if the user is unfamiliar with image processing, the user is able to generate by simple operation a subjectively desired image having the intended color reproduction characteristics based on the target image displayed on the screen.

Next, a description will be given of a second embodiment of the present disclosure. In the following, the composition and processing of an image processing device of the second embodiment which are the same as those of the image processing device 100 of the first embodiment will be omitted.

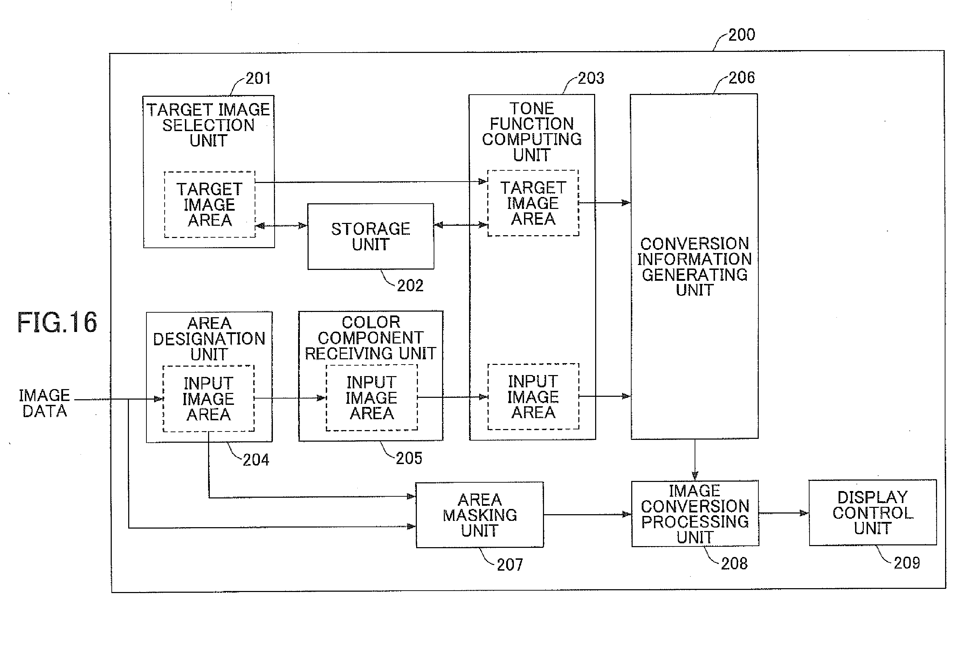

FIG. 16 shows the functional composition of an image processing device 200 of the second embodiment of the present disclosure. The hardware composition of the image processing device 200 of the second embodiment is essentially the same as that of the image processing device 100 of the first embodiment shown in FIG. 1, and a description thereof will be omitted.

As shown in FIG. 16, the image processing device 200 includes a target image selection unit 201, a storage unit 202, a tone function computing unit 203, an area designation unit 204, a color component receiving unit 205, a conversion information generating unit 206, an area masking unit 207, an image conversion processing unit 208, and a display control unit 209. First, in the image processing device 200, one or more image data groups are input and the input image data groups include an input image area 122 in which the image processing is to be performed.

After the image data are input, the user designates the input image area 122 of the input image displayed on the display unit 107 and the area designation unit 204 receives the designated input image area 122 in the input image data. After the designated input image area 122 is received, the area designation unit 204 extracts partially image data of the pixels corresponding to the input image area 122 from all the pixels contained in the input image data.

Subsequently, the color component receiving unit 205 receives the color components of image data of the input image area 122, and the tone function computing unit 203 computes the one-dimensional tone function of the input image area 122 from the received color components. The area designation in the image data, the receiving of the color components, and the calculation method of the one-dimensional tone function in the present embodiment are the same as those of the first embodiment.

The target image selection unit 201 receives a target image area 124 selected from among plural target images whose image data are stored in the storage unit 202. In this case, the user selects the target image area 124 having image data nearest to the reproduction target as a result of the image processing.

For example, a method of selecting image data of the target image area by the user is as follows. A list of target images whose image data are stored in the storage unit 202 is displayed on the display unit 107, and the user may select a target image area 124 from the displayed target image list by using the operation unit 106. If the user needs a hard copy of the target image list, the target images of the target image list are printed on a printing sheet, and the user may select the target image area 124 while checking the copy of the target image list.

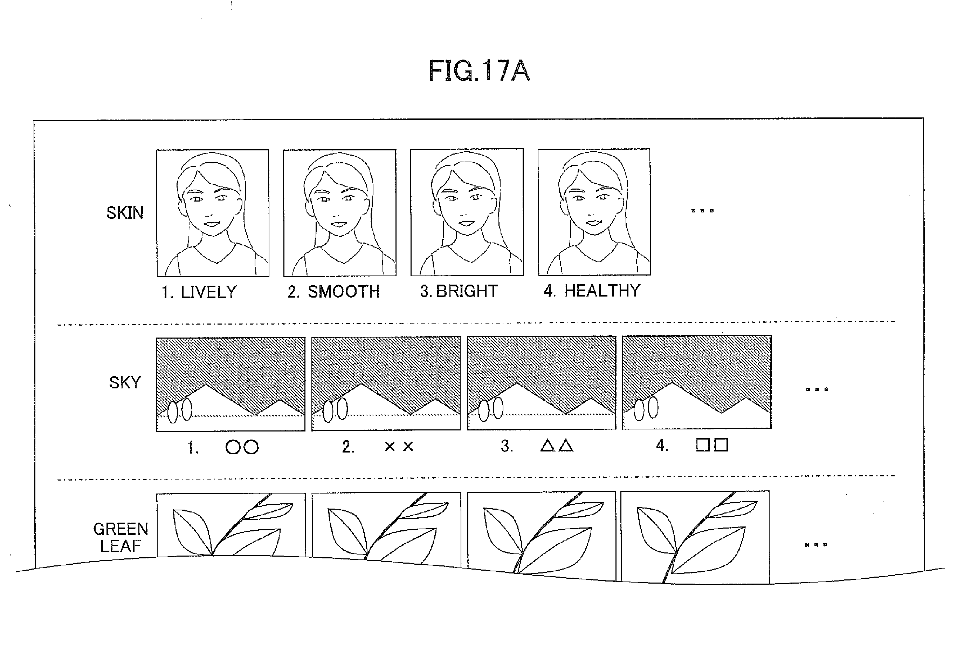

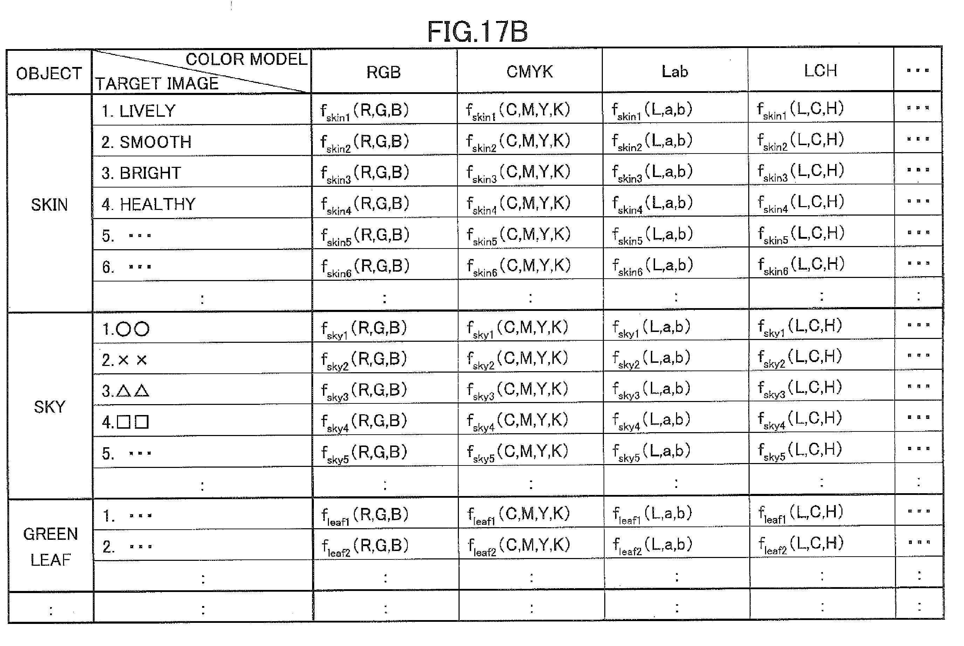

FIG. 17A and FIG. 17B show examples of the image data displayed by the target image selection unit 201.

In the storage unit 202 of the image processing device 200, photographic samples (target images) frequently used in image processing, such as skin, sky, green (leaves, trees), are stored beforehand as a group of image data having various color reproduction characteristics. For example, as shown in FIG. 17A, the target image selection unit 201 receives the image-data group from the storage unit 202 and causes the display control unit 209 to display the list of target images of the image-data group on the display unit 107.

For example, if a person's skin is designated as the input image area 122, the target images 123 of the image-data group are displayed together with the corresponding terms that express color reproduction characteristics of the target images 123, such as "lively", "smooth", "bright" and "healthy". In this manner, two or more image processing methods according to the person's skin are prepared beforehand, and the target images 123 after the image processing can be more clearly recognized by the user if the target images 123 and the corresponding terms expressing the reproduced images are displayed.

After the target image selection unit 201 receives the selected target image 123 including the target image area 124, the tone function computing unit 203 receives a corresponding one-dimensional tone function of the target image area 124 stored in the storage unit 202. All the corresponding one-dimensional tone functions of the target image areas 124 for the target images 123 displayed by the target image selection unit 201 are stored in the storage unit 202. The tone function computing unit 203 receives only the corresponding one-dimensional tone function of the target image area 124 for the selected target image 123 stored in the storage unit 202.

As shown in FIG. 17B, plural target image areas 124 (objects) included in the target images 123, and corresponding one-dimensional tone functions prepared for the respective target image areas 124 (objects), which are associated with each other, are stored beforehand in the storage unit 202.

In the example of FIG. 17B, for the term "lively" in the object "skin", the corresponding one-dimensional tone function is prepared such that the overall contrast is relatively sharp and the main grayscale inclination (gamma) is relatively large. On the contrary, for the term "smooth" in the object "skin", the corresponding one-dimensional tone function is prepared such that the overall contrast is slightly lowered and the main grayscale inclination (gamma) is relatively small.

In the example of FIG. 17B, for the term "bright" in the object "skin", the corresponding one-dimensional tone function is prepared such that the concentration of the low concentration portion is more lowered and the highlight is slightly sharp. For the term "lively" in the object "skin", the corresponding one-dimensional tone function is prepared such that the overall color balance is shifted to red.

In this manner, the one-dimensional tone functions having various color reproduction characteristics which broadly cover and match with various image processing targets are prepared. In addition, it is preferred that such one-dimensional tone functions stored in the storage unit 202 are applicable to not only the RGB color model but also other color models, such as CMYK, Lab, LCH, as shown in FIG. 17B.

Therefore, the one-dimensional tone functions of the input image area 122 and the target image area 124 can be received by the tone function computing unit 203, and the conversion information generating unit 206 can generate the conversion information. Based on the generated conversion information, the image conversion processing unit 208 performs grayscale conversion of image data of the pixels within the input image area 122 so that the color reproduction characteristics of the input image area 122 may be approximated to those of the target image area 124.

The display control unit 209 displays an image containing the image data of the input image area 122 converted by the image conversion processing unit 208, on the display unit 107. Thus, the user does not need to prepare image data in the target image area 124, and merely selects the target image area 124 (object) from among the objects of the image-data group prepared beforehand. Then, the image processing device 200 of the second embodiment converts the color reproduction characteristics of the input image area 122 to be in conformity with the color reproduction characteristics of the target image area 124.

As described above, the image processing device 200 of the second embodiment converts the image data of the pixels within the input image area 122 selected from the one or more image data groups by the user, and the user can obtain the color reproduction characteristics of the input image area 122 nearest to the color reproduction characteristics of the target image area 124.

Moreover, the image processing device 200 of the second embodiment may perform the image processing so that the color reproduction characteristics of two or more input image areas 122 designated by the user are changed to be in conformity with the color reproduction characteristics of one target image area 124.

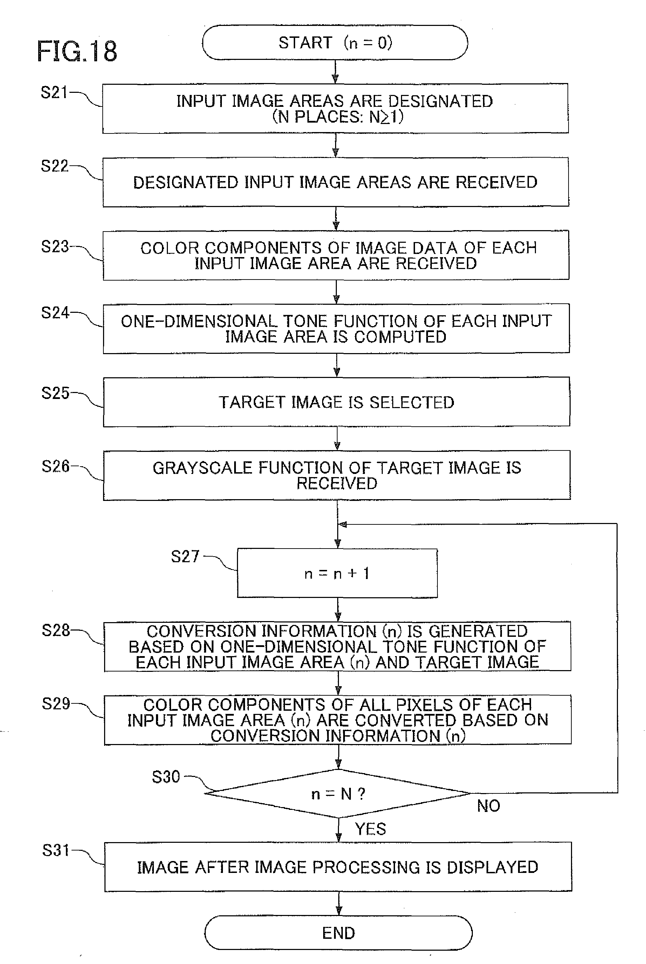

FIG. 18 is a flowchart for explaining the image processing method performed by the image processing device 200 of the second embodiment. In the present example, the plural input image areas 122 at N places (N ≥ 1) are designated by the user.

As shown in FIG. 18, the value of a counter "n" is initially zero (n = 0) upon start of the image processing method. At step S21, the user designates the input image areas 122 at the N places (N ≥ 1) from the input image data. One or more input image areas 122 at one or more places may be designated from one or more image data groups.

Subsequently, at step S22, the area designation unit 204 receives the designated input image areas 122, and at step S23, the color component receiving unit 205 receives the color components of image data of the input image areas 122.

After the color components are received by the color component receiving unit 205, at step S24, the tone function computing unit 203 computes the one-dimensional tone functions of the input image areas 122.

Subsequently, at step S25, the user selects the target image 123 from the image data of the target images displayed on the display unit 107. At step S26, the tone function computing unit 203 receives a one-dimensional tone function of the target image area corresponding to the target image 123 selected from among the one-dimensional tone functions of the target images stored in the storage unit 202. Alternatively, the selection of the target image 123 may be performed first and the designation of the input image areas 122 may be performed later. At step S27, the value of the counter "n" is incremented (n = n + 1).

Subsequently, at step S28, the conversion information generating unit 206 generates conversion information for the input image area 122 of the n-th place, and at step S29, the image conversion processing unit 208 performs grayscale conversion of the pixels in the input image area 122 of the n-th place based on the conversion information. At step S30, it is determined whether the value of the counter "n" is equal to the number "N". If the result of the determination at step S30 is negative, the control is returned to the step S27 and the processing of the steps S28 and S29 is repeated. If the result of the determination at step S30 is affirmative, the control is transferred to step S31.

At step S31, the display control unit 209 displays an image containing the image data of the input image areas 122 converted by the image conversion processing unit 208 on the screen of the display unit 107.

The processing of the steps S28 and S29 is repeated for the number N of the input image areas 122 designated by the user, and the image processing can be performed so that the image data of the input image areas 122 may be converted to be in conformity with the color reproduction characteristics of the target image area 124.

As described above, the user does not need to prepare the target image 123 including the target image area 124. The user can select the target image 123 from the image data stored beforehand in the image processing device 200 of the second embodiment. Therefore, it is possible to make the color reproduction characteristics of the input image areas approximate the color reproduction characteristics of the target image area 124 by simple operations.

Next, a description will be given of a third embodiment of the present disclosure. In the following, a description of the composition and processing of the third embodiment which are the same as those of the image processing devices 100 and 200 of the first and second embodiments will be omitted.

In the following embodiment, an MFP (multifunction peripheral) having multiple functions including a printer function, a scanner function, a copier function and a facsimile function which are installed in a single housing will be described as an example of an image reading unit which inputs image data. However, the present disclosure is not limited to the following embodiment. If inputting image data is possible, the present disclosure is applicable to any of scanner devices, facsimile devices, copier devices, etc.

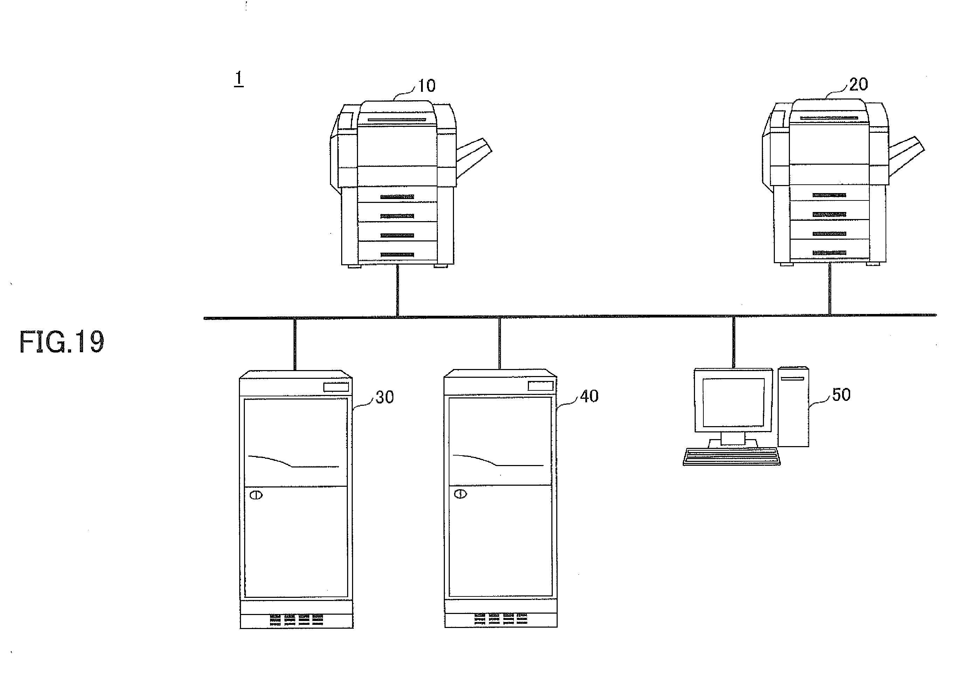

FIG. 19 shows the composition of an image processing system 1 of the third embodiment of the present disclosure. As shown in FIG. 19, MFPS (multifunction peripherals) 10 and 20, image processing servers 30 and 40, and an information processing terminal (for example, a PC (personal computer)) 50 are connected to the image processing system 1 via a network.

Each of the MFP 10 and the MFP 20 has multiple image-forming functions including a scanner function as an image reading unit, a copier function, a printer function, a facsimile function, etc., which are installed in a single housing. Each MFP (MFP 10 or 20) is operative to generate image data by scanning of a printing medium by using the scanner function and to transmit the generated image data to the image processing server 30 or 40 by using the facsimile function. The details of the MFP 10 or 20 will be described later.

Each of the image processing servers 30 and 40 is a computer, such as a workstation, which receives image data scanned at each of the MFPS 10 and 20 and performs various processes. Each image processing server (30 or 40) operates as a server which performs image processing of the input image data and functions as an image processing device. Alternatively, the image processing servers 30 and 40 may be incorporated in the MFPS 10 and 20, respectively.

Each of the image processing servers 30 and 40 may be the image processing device which performs image processing on the image data received through the network or the images read by the MFPS 10 and 20. The function of the image processing device provided by the image processing server 30 may be installed in the information processing terminal 50.

In the image processing system 1 of the third embodiment, the number of MFPS, the number of image processing servers, and the number of information processing terminals, which are connected together via the network, are optional.

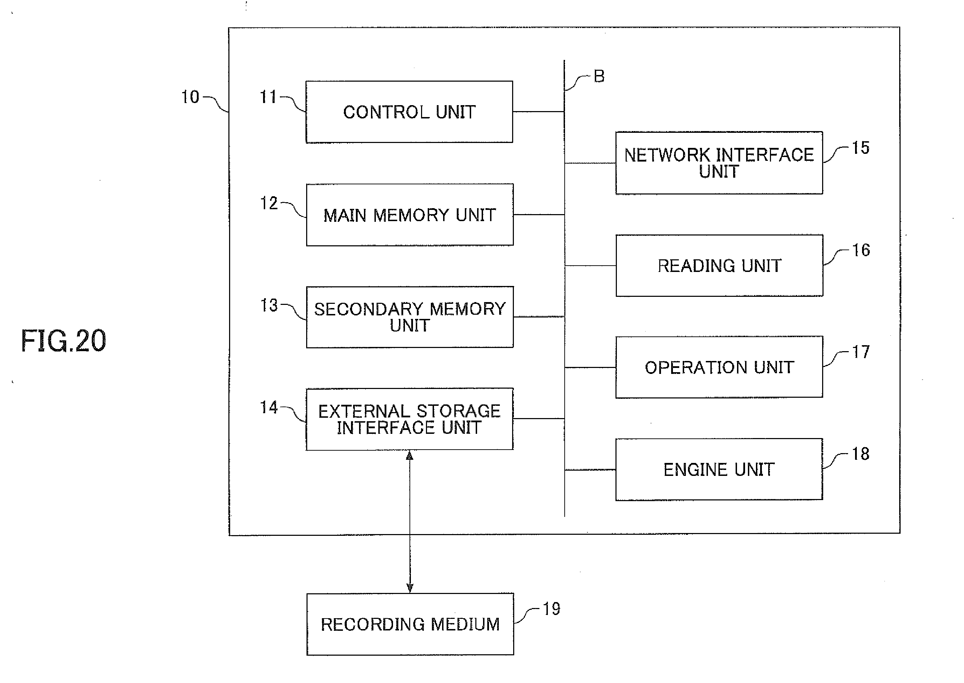

FIG. 20 shows the hardware composition of the MFP 10. As shown in FIG. 20, the MFP 10 includes a control unit 11, a main memory unit 12, a secondary memory unit 13, an external storage interface unit 14, a network interface unit 15, a reading unit 16, an operation unit 17, and an engine unit 18.

The control unit 11 may include a CPU which performs control of the respective units of the MFP 10 and performs computation and processing of data. The control unit 11 may include a processor unit which executes a program stored in the main memory unit 12, and the processor unit receives data from an input unit or a storage unit, performs computation and processing of the data, and outputs the processed data to an output unit or a storage unit.

The main memory unit 12 may include a ROM (read only memory), a RAM (random access memory), etc. In the main memory unit 12, the OS (operating system) as the basic software executed by the control unit 11, application programs and data are stored or temporarily retained.

The secondary memory unit 13 may include a HDD (hard disk drive) or the like. In the secondary memory unit 13, data relevant to the application programs and others are stored.

The external storage interface unit 14 provides an interface between a recording medium 19 (for example, a flash memory) and the MFP 10. For example, by using a data transmission line, such as USB (universal serial bus), the external storage interface unit 14 is connected to the recording medium 19.

A predetermined program is stored in the recording medium 19, and the recording medium 19 is attached to the MFP 10. The predetermined program stored in the recording medium 19 is installed in the main memory unit 12 of the MFP 10 through the external storage interface unit 14. After the installation, the predetermined program is read from the main memory unit 12 and executed by the control unit 11 of the MFP 10.

The network interface unit 15 provides an interface between a peripheral device and the MFP 10, the peripheral device having a communication function and being connected via a wired or wireless network, such as a LAN (local area network) or a WAN (wide area network), which is constructed by data transmission lines.

The reading unit 16 may include a scanner unit which reads an image by scanning a paper medium or the like, and receives the read image as image data.

The operation unit 17 may include key switches (composed of hard keys) and an LCD (liquid crystal display) having a touch panel function including software keys of a GUI (graphical user interface). The operation unit 17 may include a display unit and/or an input unit which functions as a UI (user interface) for a user to perform various setting processes when using functions of the MFP 10.

The engine unit 18 may include a mechanical image formation unit, such as a plotter, which performs an image formation process.

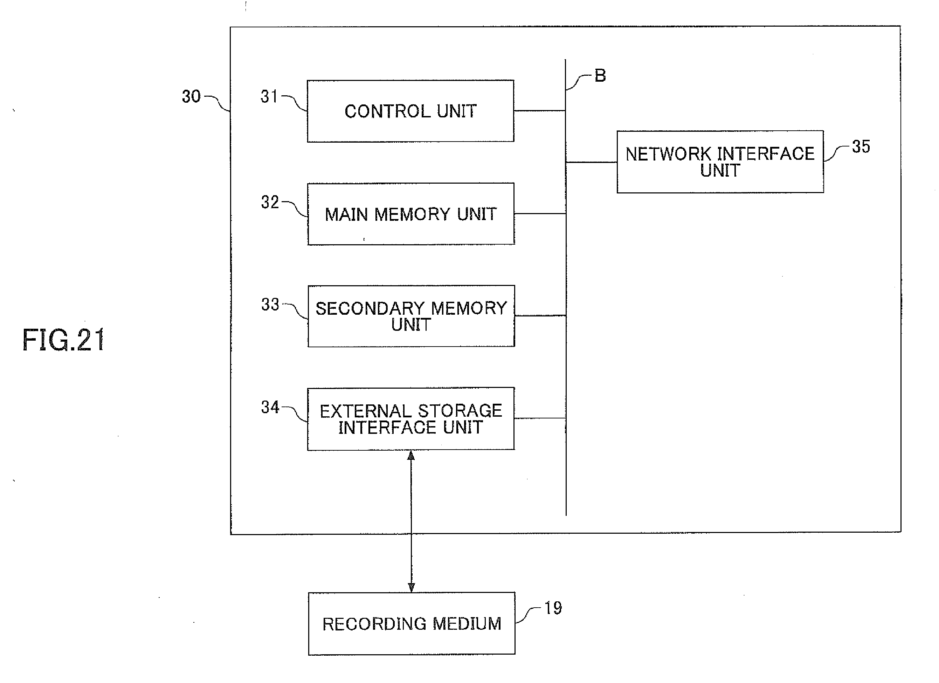

FIG. 21 shows the hardware composition of the image processing server 30. As shown in FIG. 21, the image processing server 30 includes a control unit 31, a main memory unit 32, a secondary memory unit 33, an external storage interface unit 34, and a network interface unit 35.

The control unit 31 may include a CPU which performs control of the respective units of the image processing server and performs computation and processing of data. The control unit 31 may include a processor unit which executes a program stored in the main memory unit 32, and the processor unit receives data from an input unit or a storage unit, performs computation and processing of the data, and outputs the processed data to an output unit or a storage unit.

The main memory unit 32 may include a ROM (read only memory), a RAM (random access memory), etc. In the main memory unit 32, the OS (operating system) as the basic software executed by the control unit 31, application programs and data are stored or temporarily retained.

The secondary memory unit 33 may include a HDD (hard disk drive) or the like. In the secondary memory unit 33, data relevant to the application programs and others are stored.

The external storage interface unit 34 provides an interface between a recording medium 19 (for example, a flash memory) and the image processing server 30. For example, by using a data transmission line, such as USB (universal serial bus), the external storage interface unit 34 is connected to the recording medium 19.

A predetermined program is stored in the recording medium 19, and the recording medium 19 is attached to the image processing server 30. The predetermined program stored in the recording medium 19 is installed in the main memory unit 32 of the image processing server 30 through the external storage interface unit 34. After the installation, the predetermined program is read from the main memory unit 32 and executed by the control unit 31 of the image processing server 30.

The network interface unit 35 provides an interface between a peripheral device and the image processing server 30, the peripheral device having a communication function and connected via a wired or wireless network, such as a LAN (local area network) or a WAN (wide area network), which is constructed by data transmission lines.

In the composition of the image processing server 30 as shown in FIG. 21, an operation unit such as a keyboard and a display unit such as an LCD are not included. Alternatively, the image processing server 30 in the present embodiment may be arranged to include the operation unit and the display unit.

The hardware composition of the information processing terminal 50 in the present embodiment is essentially the same as that of the image processing device 100 of the first embodiment shown in FIG. 1, and a description thereof will be omitted.

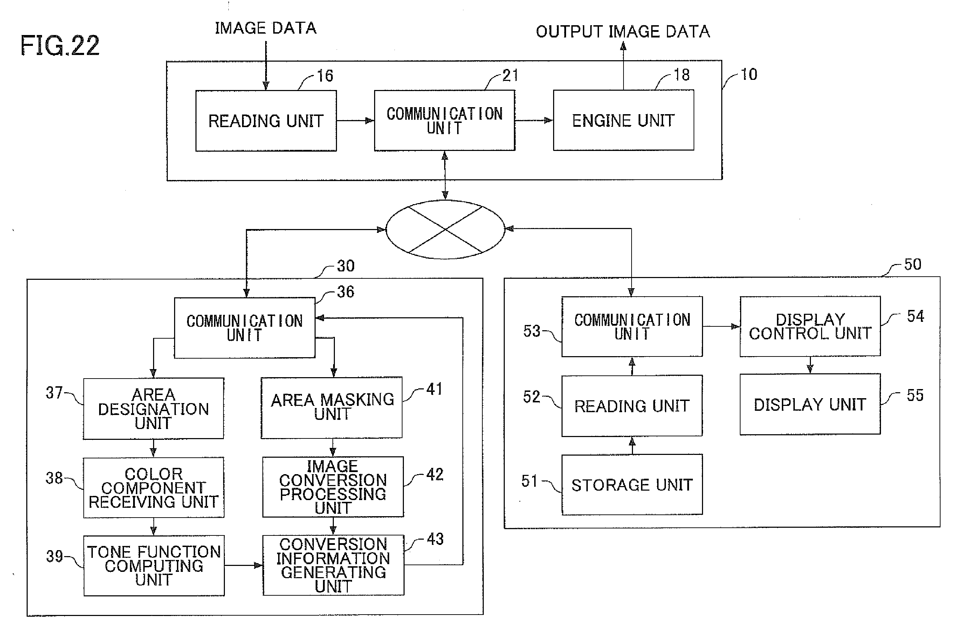

FIG. 22 shows the functional composition of the image processing system 1 of the third embodiment.

The MFP 10 includes a reading unit 16, a communication unit 21, and an engine unit 18.

The reading unit 16 may receive image data on which the image processing is to be performed, by scanning a paper document, etc.

The communication unit 21 may receive the image data stored in the storage unit 51 of the information processing terminal 50. The image data received by the reading unit 16 may be transmitted to the image processing server 30 (which is an image processing device), and the processed image data after the image processing is performed may be received from the image processing server 30 at the communication unit 21.

The engine unit 18 may print or output the processed image data after the image processing is performed by the image processing server 30 onto a printing medium, such as a printing sheet. The processed image data after the image conversion processing is performed by the image processing server 30 may be printed on a printing medium by the engine unit 18.

The information processing terminal 50 includes a storage unit 51, a reading unit 52, a communication unit 53, a display control unit 54, and a display unit 55.

The storage unit 51 stores the input image 121 and the target image 123. The reading unit 52 reads image data of the input image 121 and the target image 123 from the storage unit 51.

The communication unit 53 transmits the image data read by the reading unit 52 to the MFP 10 or the image processing server 30. The communication unit 53 receives the image data sent from the MFP 10 or the image processing server 30.

The display control unit 54 displays the image data received by the communication unit 53 on the display unit 55. The display control unit 54 may display the image data stored in the information processing terminal 50 on the display unit 55.

The display unit 55 is, for example, an LCD (liquid crystal display), an organic EL (electroluminescence) display, etc. Images, operational icons, etc. are displayed on the display unit 55.

The image processing server 30 includes a communication unit 36, an area designation unit 37, a color component receiving unit 38, a tone function computing unit 39, an area masking unit 41, an image conversion processing unit 42, and a conversion information generating unit 43. The functions of these units in the present embodiment are essentially the same as those of the image processing device 100 or 200 of the first embodiment or the second embodiment, and a description thereof will be omitted.

In the present embodiment, the user receives the images including those in the input image area 122 on which the image processing is to be performed and the target image area 124 as the image data by using the reading unit 16 of the MFP 10, and performs the image processing by using the image processing server 30. Alternatively, the user may receive from the information processing terminal 50 the image data including those in the input image area 122 on which the image processing is to be performed, and may perform the image processing by using the image processing server 30.

In the image-processing server 30, the input image area 122 and the target image area 124, both designated by the user, are received at the area designation unit 37. In the image processing server 30, the image processing is performed through the color component receiving unit 38, the tone function computing unit 39, and the conversion information generating unit 43, so that the color reproduction characteristics of the input image area 122 are converted to be in conformity with those of the target image area 124. The engine unit 18 of the MFP 10 prints the processed image data on a printing medium or causes the processed image data to be transmitted as the image data to the information processing terminal 50. Alternatively, the received image data may be displayed on the screen of the display unit 55 by the display control unit 54 of the information processing terminal 50.

In the present embodiment, the input image area 122 and the target image area 124 may be designated by the user using the display unit and the operation unit (not illustrated) in either the MFP 10 or the image processing server 30. Alternatively, the area designation may be performed by the user using the display unit 55 and the operation unit (not illustrated) in the information processing terminal 50 connected via the network.

Alternatively, the image processing system may be arranged so that the image processing function of the image processing server 30 is installed in the information processing terminal 50 so that the image processing may be performed on the information processing terminal 50.

The user may transmit the processed image data from the image processing server 30 to the MFP 10 connected via the network. In this case, the engine unit 18 of the MFP 10 prints the received image on a printing sheet, and the user can obtain the printed image having the desired color reproduction characteristics.

Alternatively, the user may transmit the processed image data from the image processing server 30 to the information processing terminal 50 connected via the network. In this case, the display control unit 54 of the information processing terminal 50 displays the received image on the display screen, and the user can obtain the displayed image having the desired color reproduction characteristics.

As described above, in the image processing system 1 of the third embodiment, the user can receive the image data on which the image processing is to be performed, by using the MFP 10, and can perform the image processing of the image data on the image processing server 30 or the information processing terminal 50.

According to the above-described embodiments, if the user designates the input image area 122 and the target image area 124 from the input image data, the image processing device computes the one-dimensional tone functions from the color components of the respective areas, and generates conversion information from the one-dimensional tone functions. Then, the image processing device converts the color components of the pixels in the input image area 122 based on the generated conversion information, and the color reproduction characteristics of the input image area 122 are changed to be in conformity with the color reproduction characteristics of the target image area 124, so that the user can obtain a desired image by simple operations.

Even if the user is unfamiliar with image processing, the user is able to generate by simple operations a subjectively desired image having the intended color reproduction characteristics based on the target image displayed on the screen.

As described in the foregoing, according to the image processing device of the present disclosure, it is possible to easily provide color reproduction characteristics of a target image for an input image area designated from an input image.

**Claims**

**1.** An image processing device (100) comprising:

a display unit (107) configured to display images;
an area designation unit (110) configured to receive a target image area and an input image area both designated from the images;
a tone function computing unit (112) configured to compute a one-dimensional tone function of the target image area and a one-dimensional tone function of the input image area;
a conversion information generating unit (113) configured to generate conversion information to convert the one-dimensional tone function of the input image area into the one-dimensional tone function of the target image area;
an image conversion processing unit (115) configured to convert image data of the input image area based on the conversion information; and
a display control unit (116) configured to display the image containing the image data of the input image area converted by the image conversion processing unit on the display unit.

**2.** The image processing device according to claim 1, further comprising:

a color component receiving unit (111) configured to receive color components from pixels which constitute the target image area and color components from pixels which constitute the input image area, wherein
the tone function computing unit (112) computes each of the one-dimensional tone functions based on a spatial distribution of the color components; and
the image conversion processing unit (115) converts the color components of the pixels which constitute the input image area based on the conversion information.

**3.** The image processing device according to claim 1 or 2, wherein the conversion information is a table or a conversion formula to convert the one-dimensional tone function of the input image area into the one-dimensional tone function of the target image area.

**4.** The image processing device according to any of claims 1 to 3, wherein the display control unit (116, 209) is configured to display a plurality of target images on the display unit (107) when the target image area is designated, and the area designation unit (110, 201) is configured to receive the target image area selected from among the plurality of target images displayed on the display unit (107).

**5.** The image processing device according to claim 4, wherein the tone function computing unit (112, 203) is configured to receive the one-dimensional tone function of the target image area selected from among the one-dimensional tone functions of the plurality of target images stored beforehand in a storage unit (202).

**6.** The image processing device according to claim 4 or 5, wherein, when the target image area is designated, the display control unit (116, 209) displays the plurality of target images on the display unit (107) with corresponding terms which express color reproduction characteristics of the respective target images.

**7.** The image processing device according to any of claims 1 to 6, wherein each of the one-dimensional tone functions computed is an approximation function which is determined to minimize a distance from plots of the color components in a range between a maximum lightness point and a minimum lightness point among the color components respectively received from the target image area and the input image area.

**8.** The image processing device according to any of claims 1 to 7, wherein the display control unit (116, 209) is configured to display one or more of the images on the display unit (107) when the area designation unit (110, 204) receives the input image area, the area designation unit (110, 204) is configured to receive two or more of the input image areas designated from the one or more of the images displayed, and the image conversion processing unit (115, 208) is configured to convert the image data of each of the two or more input image areas based on the conversion information.

9. An image processing system comprising:

an image processing device (30); and
an information processing terminal (50),
which are connected via a network, the image processing device (30) including
an area designation unit (37) configured to receive a target image area and an input image area both designated from images;
a tone function computing unit (39) configured to compute a one-dimensional tone function of the target image area and a one-dimensional tone function of the input image area;
a conversion information generating unit (43) configured to generate conversion information to convert the one-dimensional tone function of the input image area into the one-dimensional tone function of the target image area; and
an image conversion processing unit (42) configured to convert image data of the input image area based on the conversion information;
the information processing terminal (50) including
a display unit (55); and
a display control unit (54) configured to display the image containing the image data of the input image area converted by the image conversion processing unit (42) on the display unit (55).

10. An image processing method for use in an image processing device (100) including a display unit (107) to display images, the image processing method comprising:

an area designation step of receiving a target image area and an input image area both designated from the images;
a tone function computing step of computing a one-dimensional tone function of the target image area and a one-dimensional tone function of the input image area;
a conversion information generating step of generating conversion information to convert the one-dimensional tone function of the input image area into the one-dimensional tone function of the target image area;
an image conversion processing step of converting image data of the input image area based on the conversion information; and
a display control step of displaying an image containing the image data of the input image area converted in the image conversion processing step on the display unit (107).

11. A non-transitory computer-readable recording medium storing a program which, when executed by a computer, causes the computer to perform the image processing method of claim 10.

EP 2 600 606 A2

# FIG.1

# FIG.2

EP 2 600 606 A2

# FIG.3A

121      122

# FIG.3B

123      124

## FIG.4A

## FIG.4B

**FIG.5A**

**FIG.5B**

**FIG.5C**

# FIG.6

# FIG.7

START

S1 — TARGET IMAGE AND INPUT IMAGE ARE DISPLAYED

S2 — DESIGNATED TARGET IMAGE AREA AND DESIGNATED INPUT IMAGE AREA ARE RECEIVED

S3 — ONE-DIMENSIONAL TONE FUNCTIONS OF TARGET IMAGE AREA AND INPUT IMAGE AREA ARE COMPUTED

S4 — IMAGE DATA OF INPUT IMAGE AREA IS CONVERTED BASED ON CONVERSION INFORMATION

S5 — IMAGE AFTER IMAGE PROCESSING IS DISPLAYED ON DISPLAY UNIT

END

## FIG.8

**TG010**

123 →

TARGET IMAGE

IM001 / IM002 / IM003

121

INPUT IMAGE

PLEASE DESIGNATE A TARGET IMAGE AREA

A. OBJECT DESIGNATION

| SKIN |
| SKY |
| GREEN (LEAF, TREE) |

B. CLICK DESIGNATION

C. POLYGON SELECTION

RETURN

OK

EP 2 600 606 A2

# FIG.9

TG010

IM001 / IM002 / IM003

123

124

TARGET IMAGE

121

INPUT IMAGE

PLEASE DESIGNATE A TARGET IMAGE AREA

A. OBJECT DESIGNATION

SKIN
SKY
GREEN (LEAF, TREE)

B. CLICK DESIGNATION

C. POLYGON SELECTION

RETURN

OK

EP 2 600 606 A2

# FIG.10

TG010

IM001 / IM002 / IM003

123

124

121

TARGET IMAGE

INPUT IMAGE

PLEASE DESIGNATE A TARGET IMAGE AREA

A. OBJECT DESIGNATION

SKIN
SKY
GREEN (LEAF, TREE)

B. CLICK DESIGNATION

C. POLYGON SELECTION

RETURN

OK

EP 2 600 606 A2

# FIG.11

TG010

IM001 / IM002 / IM003

123

124

121

TARGET IMAGE

INPUT IMAGE

PLEASE DESIGNATE A TARGET IMAGE AREA

A. OBJECT DESIGNATION

SKIN
SKY
GREEN (LEAF, TREE)

B. CLICK DESIGNATION

C. POLYGON SELECTION

RETURN

OK

EP 2 600 606 A2

EP 2 600 606 A2

FIG.12

PLEASE DESIGNATE A TARGET IMAGE AREA

A. OBJECT DESIGNATION

| SKIN |
| SKY |
| GREEN (LEAF, TREE) |

B. CLICK DESIGNATION

C. POLYGON SELECTION

RETURN

OK

INPUT IMAGE

TARGET IMAGE

IM001    IM002    IM003

TG010

121

124

123

# FIG.13

TARGET IMAGE

INPUT IMAGE

TG010

IM001 / IM002 / IM003

123

124

121

122

PLEASE DESIGNATE AN INPUT IMAGE AREA

A. OBJECT DESIGNATION

SKIN
SKY
GREEN (LEAF, TREE)

B. CLICK DESIGNATION

C. POLYGON SELECTION

RETURN

OK

EP 2 600 606 A2

# FIG.14

# FIG.15

START (n = 0)

S11 — TARGET IMAGE AREA IS DESIGNATED

S12 — INPUT IMAGE AREAS ARE DESIGNATED
(N PLACES: N≥1)

S13 — DESIGNATED TARGET IMAGE AREA AND DESIGNATED
INPUT IMAGE AREAS ARE RECEIVED

S14 — COLOR COMPONENTS OF IMAGE DATA OF TARGET
IMAGE AREA AND EACH INPUT IMAGE AREA ARE
RECEIVED

S15 — ONE-DIMENSIONAL TONE FUNCTIONS OF TARGET
IMAGE AREA AND EACH INPUT IMAGE AREA ARE
COMPUTED

S16 — $n = n + 1$

S17 — CONVERSION INFORMATION (n) IS GENERATED BASED
ON ONE-DIMENSIONAL TONE FUNCTIONS OF TARGET
IMAGE AREA AND EACH INPUT IMAGE AREA (n)

S18 — COLOR COMPONENTS OF ALL PIXELS OF EACH
INPUT IMAGE AREA (n) ARE CONVERTED BASED ON
CONVERSION INFORMATION (n)

S19 — $n = N$ ? — NO

YES

S20 — IMAGE AFTER IMAGE PROCESSING IS DISPLAYED

END

FIG.16

EP 2 600 606 A2

FIG.17A

SKIN

1. LIVELY  2. SMOOTH  3. BRIGHT  4. HEALTHY  ...

SKY

1. ○○  2. ××  3. △△  4. □□  ...

GREEN LEAF

...

## FIG.17B

| OBJECT | COLOR MODEL / TARGET IMAGE | RGB | CMYK | Lab | LCH | ··· |
|---|---|---|---|---|---|---|
| SKIN | 1. LIVELY | $f_{skin1}(R,G,B)$ | $f_{skin1}(C,M,Y,K)$ | $f_{skin1}(L,a,b)$ | $f_{skin1}(L,C,H)$ | ··· |
| | 2. SMOOTH | $f_{skin2}(R,G,B)$ | $f_{skin2}(C,M,Y,K)$ | $f_{skin2}(L,a,b)$ | $f_{skin2}(L,C,H)$ | ··· |
| | 3. BRIGHT | $f_{skin3}(R,G,B)$ | $f_{skin3}(C,M,Y,K)$ | $f_{skin3}(L,a,b)$ | $f_{skin3}(L,C,H)$ | ··· |
| | 4. HEALTHY | $f_{skin4}(R,G,B)$ | $f_{skin4}(C,M,Y,K)$ | $f_{skin4}(L,a,b)$ | $f_{skin4}(L,C,H)$ | ··· |
| | 5. ··· | $f_{skin5}(R,G,B)$ | $f_{skin5}(C,M,Y,K)$ | $f_{skin5}(L,a,b)$ | $f_{skin5}(L,C,H)$ | ··· |
| | 6. ··· | $f_{skin6}(R,G,B)$ | $f_{skin6}(C,M,Y,K)$ | $f_{skin6}(L,a,b)$ | $f_{skin6}(L,C,H)$ | ··· |
| | : | : | : | : | : | : |
| SKY | 1.○○ | $f_{sky1}(R,G,B)$ | $f_{sky1}(C,M,Y,K)$ | $f_{sky1}(L,a,b)$ | $f_{sky1}(L,C,H)$ | ··· |
| | 2.× × | $f_{sky2}(R,G,B)$ | $f_{sky2}(C,M,Y,K)$ | $f_{sky2}(L,a,b)$ | $f_{sky2}(L,C,H)$ | ··· |
| | 3.△ △ | $f_{sky3}(R,G,B)$ | $f_{sky3}(C,M,Y,K)$ | $f_{sky3}(L,a,b)$ | $f_{sky3}(L,C,H)$ | ··· |
| | 4.□ □ | $f_{sky4}(R,G,B)$ | $f_{sky4}(C,M,Y,K)$ | $f_{sky4}(L,a,b)$ | $f_{sky4}(L,C,H)$ | ··· |
| | 5. ··· | $f_{sky5}(R,G,B)$ | $f_{sky5}(C,M,Y,K)$ | $f_{sky5}(L,a,b)$ | $f_{sky5}(L,C,H)$ | ··· |
| | : | : | : | : | : | : |
| GREEN LEAF | 1. ··· | $f_{leaf1}(R,G,B)$ | $f_{leaf1}(C,M,Y,K)$ | $f_{leaf1}(L,a,b)$ | $f_{leaf1}(L,C,H)$ | ··· |
| | 2. ··· | $f_{leaf2}(R,G,B)$ | $f_{leaf2}(C,M,Y,K)$ | $f_{leaf2}(L,a,b)$ | $f_{leaf2}(L,C,H)$ | ··· |
| | : | : | : | : | : | : |
| : | : | : | : | : | : | : |

EP 2 600 606 A2

**FIG.18**

START (n = 0)

↓

S21 — INPUT IMAGE AREAS ARE DESIGNATED
(N PLACES: N≥1)

↓

S22 — DESIGNATED INPUT IMAGE AREAS ARE RECEIVED

↓

S23 — COLOR COMPONENTS OF IMAGE DATA OF EACH
INPUT IMAGE AREA ARE RECEIVED

↓

S24 — ONE-DIMENSIONAL TONE FUNCTION OF EACH INPUT
IMAGE AREA IS COMPUTED

↓

S25 — TARGET IMAGE IS SELECTED

↓

S26 — GRAYSCALE FUNCTION OF TARGET IMAGE IS
RECEIVED

↓

S27 — $n = n + 1$

↓

S28 — CONVERSION INFORMATION (n) IS GENERATED
BASED ON ONE-DIMENSIONAL TONE FUNCTION OF
EACH INPUT IMAGE AREA (n) AND TARGET IMAGE

↓

S29 — COLOR COMPONENTS OF ALL PIXELS OF EACH
INPUT IMAGE AREA (n) ARE CONVERTED BASED ON
CONVERSION INFORMATION (n)

↓

S30 — $n = N$ ? — NO

↓ YES

S31 — IMAGE AFTER IMAGE PROCESSING IS DISPLAYED

↓

END

FIG.19

**FIG.20**

EP 2 600 606 A2

EP 2 600 606 A2

# FIG.21

FIG.22

IMAGE DATA

OUTPUT IMAGE DATA

```
┌─────────────────────────────────────────────────────────────────┐ 10
│         ↓16              21              18                        │
│  ┌──────────────┐  ┌──────────────┐  ┌──────────────┐             │
│  │ READING UNIT │→ │ COMMUNICATION│→ │ ENGINE UNIT  │             │
│  │              │  │    UNIT      │  │              │             │
│  └──────────────┘  └──────────────┘  └──────────────┘             │
└─────────────────────────────────────────────────────────────────┘
```

30

50

COMMUNICATION UNIT — 36

COMMUNICATION UNIT — 53

DISPLAY CONTROL UNIT — 54

37 — AREA DESIGNATION UNIT

41 — AREA MASKING UNIT

52 — READING UNIT

55 — DISPLAY UNIT

38 — COLOR COMPONENT RECEIVING UNIT

42 — IMAGE CONVERSION PROCESSING UNIT

51 — STORAGE UNIT

39 — TONE FUNCTION COMPUTING UNIT

43 — CONVERSION INFORMATION GENERATING UNIT

EP 2 600 606 A2

**EP 2 600 606 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007158824 A